# EUROPEAN PATENT APPLICATION

(11) **EP 2 120 136 A1**
(43) Date of publication of application: **18.11.2009**
(21) Application number: 07850739.9
(22) Date of filing: 17.12.2007
(51) Int. Cl.: G06F 3/041, G02F 1/1333, G09F 9/00

(54) **DISPLAY PANEL SUBSTRATE, DISPLAY PANEL, DISPLAY DEVICE AND METHOD FOR MANUFACTURING DISPLAY PANEL SUBSTRATE**

(30) Priority: 01.03.2007 JP 2007051986
(71) Applicant: Sharp Kabushiki Kaisha, Osaka-shi Osaka 545-8522 (JP)
(72) Inventor: MURAI, Atsuhito, c/o SHARP Kabushiki Kaisha, Osaka-shi Osaka 545-8522 (JP); CHIKAMA, Yoshimasa, c/o SHARP Kabushiki Kaisha, Osaka-shi Osaka 545-8522 (JP); TAKAHASHI, Kazuki, c/o SHARP Kabushiki Kaisha, Osaka-shi Osaka 545-8522 (JP)
(74) Representative: Müller - Hoffmann & Partner
(86) International application number: PCT/JP2007/074251
(87) International publication number: WO 2008/108042

(57) **Abstract**

A display panel substrate according to the present invention includes at least an insulating substrate, first conductive wires formed on the insulating substrate, a piezoelectric material film formed on the first conductive wires, second conductive wires intersecting with the first conductive wires, and a protecting film for protecting the first conductive wires, the second conductive wires, and the piezoelectric material film. The insulating film is formed at least in an area in an effective display area on the insulating substrate. The piezoelectric film is formed at least at an intersection of a first conductive wire and a second conductive wire. This makes it possible to provide a display panel substrate that allows integration of a touch panel function into a display panel without causing an increase in size of the display panel.

## Description

### Technical Field

The present invention relates to a display panel substrate that constitutes a display panel, a display panel including the display panel substrate, a display apparatus including the display panel, and a method for manufacturing the display panel substrate.

### Background Art

Conventionally, a so-called touch panel has been commonly provided in a display apparatus so that a user can easily operate the display apparatus while viewing a display screen. A touch panel is generally joined with a display screen of a display apparatus. A user performs various operations by pushing (selecting), via a touch panel, objects (such as buttons) displayed on a display screen.

Patent Literature 1 discloses a typical example of a touch panel to be attached to a display apparatus. Patent Literature 1 discloses a pressing-force detecting section (touch panel) arranged such that (i) a plurality of electrodes formed on one side of a piezoelectric body so as to extend in a direction X and (ii) a plurality of electrodes formed on the other side of the piezoelectric body so as to extend in a direction Y.

Unfortunately, the touch panel of Patent Literature 1 causes a decrease in transmittance of light that is used for a screen display, because the touch panel needs to be joined with a front surface (i.e., display screen) of a display apparatus. In addition, the touch panel causes an increase in manufacturing cost, because the touch panel needs to be prepared separately from a display apparatus.

In order to solve these problems, some arts for integrating a touch panel into a display apparatus have been proposed.

Patent Literature 2 discloses a display apparatus having a touch-sensing function. The display apparatus is arranged such that piezoelectric plates each having a blind-like electrode formed thereon are fixed in an array arrangement on a peripheral edge of an insulating substrate so that a surface of the insulating substrate has a function of exciting a surface acoustic wave. Contact between a fingertip or another substance and the surface of the insulating substrate causes a change in propagation intensity of an excited surface acoustic wave. The display apparatus detects the change in intensity, thereby specifying the position of the contact.

The display apparatus does not require a separate touch panel to be combined therewith. In other words, the display apparatus has a touch panel integrated thereinto.

Patent Literature 3 discloses a touch panel including an SAW touch panel provided on one principal surface of a single non-piezoelectric substrate and an organic EL display section provided on the other principal surface of the non-piezoelectric substrate. The SAW touch panel has, on a peripheral edge of the non-piezoelectric substrate, transmitting transducers for exciting a surface acoustic wave and receiving transducers for receiving a surface wave. The SAW touch panel detects a contact position on the one principal surface of the non-piezoelectric substrate in accordance with a result of reception by a receiving element of a surface acoustic wave that propagates from an excitation element to the receiving element. The transmitting transducer and the receiving transducer each have a dogleg comb-shaped electrode provided on one principal surface of a thin-film piezoelectric body and a flat-plate electrode provided on the other principal surface. Such comb-shaped electrodes are successively disposed along the peripheral edge of the non-piezoelectric substrate.

According to the art of Patent Literature 3, a display apparatus and a touch panel are built onto one substrate. This makes it possible to provide a slim small touch panel, integrated into a display apparatus, which is capable of high-resolution position detection.

### Citation List

Patent Literature 1
Japanese Patent Application Publication, Tokukai, No. 2006-163619 A (Publication Date: June 22, 2006)
Patent Literature 2
Japanese Patent Application Publication, Tokukai, No. 2002-342027 A (Publication Date: November 29, 2002)
Patent Literature 3
Japanese Patent Application Publication, Tokukai, No. 2006-48453 A (Publication Date: February 16, 2006)

### Summary of Invention

According to the art of Patent Literature 2 or 3, piezoelectric bodies are disposed in a picture frame of a substrate. This causes an increase in size of the picture frame of the substrate, thus unfortunately causing an increase in size of a display apparatus.

The present invention has been made to solve the problem. An object of the present invention is to provide (i) a display panel substrate that serves as a touch panel without an increase in size and constitutes a display panel, (ii) a display panel including the display panel substrate, (iii) a display apparatus including the display panel, and a method for manufacturing the display panel substrate.

In order to attain the object, a display panel substrate according to the present invention is a display panel substrate that constitutes a display panel, including: an insulating substrate; first conductive wires formed on the insulating substrate; a piezoelectric film formed on the first conductive wires and the insulating substrate so as to be at least in an effective display area of the insulating substrate; second conductive wires intersecting with the first conductive wires via the piezoelectric film; and an insulating film for protecting the first and second conductive wires and the piezoelectric film at least in the effective display area of the insulating substrate.

According to the arrangement, when subjected to pressure, the piezoelectric film generates a voltage in accordance with the pressure. The voltage is detected via the first conductive wires or the second conductive wires, which intersect (e.g., perpendicularly intersect) with each other, by a detecting circuit connected to the conductive wires.

This allows the display panel substrate to serve as a so-called touch panel that detects a contact position on the display panel substrate. In other words, the use of the display panel substrate makes it possible to realize a display panel housing a touch panel. Since the display panel already has a touch panel function, it is not necessary to separately join a touch panel with a display surface.

This makes it possible to cause the display panel utilizing the display panel substrate to be thinner than a conventional display panel. In addition, this allows a reduction in manufacturing cost of the display panel. Furthermore, it is not necessary to provide a piezoelectric film on a picture frame of the insulating substrate. The arrangement allows a reduction in thickness of a display panel constituted by the display panel substrate. In addition, the arrangement does not cause an increase in size of the display panel while allowing integration of a touch panel into the display panel.

The display panel substrate according to the present invention is preferably further arranged such that the piezoelectric film has an opening at least in a part of an area surrounded by two first conductive wires and two second conductive wires.

According to the arrangement, no piezoelectric films are formed in areas each surrounded by two first conductive wires and two second conductive wires, i.e., light transmission areas in the effective display area. This makes it possible to increase light transmittance, in comparison with a case where piezoelectric films are formed in the areas.

The display panel substrate according to the present invention is preferably further arranged such that, in formation of at least either the first conductive wires or the second conductive wires, a conductive material film formed closest to a displaying/viewing surface is made of at least one selected from chrome, chrome oxide, tantalum, and tantalum nitride.

According to the arrangement, at least either the first conductive wires or the second conductive wires are made of such a metal material having a low reflection property. According to the arrangement, in a display panel utilizing the display panel substrate, the low-reflectance material provided on the insulating substrate absorbs a part of light incident from the outside of the display panel upon the insulating substrate, thereby reducing reflection of the light toward a viewer viewing a display image from the side of the display panel substrate. This makes it possible to enhance contrast of an image displayed by the display panel utilizing the display panel substrate.

The display panel substrate according to the present invention is preferably further arranged such that a light-blocking film is formed in a lower position corresponding to an area shaped into a reticular pattern by the first conductive wires and the second conductive wires.

According to the arrangement, the light-blocking film (e.g., black matrix) is formed between the insulating substrate and the first and second conductive wires so as to be in a lower position corresponding to an area shaped into a reticular pattern by the first conductive wires and the second conductive wires. According to the arrangement, in a display panel utilizing the display panel substrate, the light-blocking film provided on the insulating substrate absorbs a part of light incident from the outside of the display panel upon the insulating substrate, thereby reducing reflection of the light toward a viewer viewing a display image from the side of the display panel substrate. This makes it possible to enhance contrast of an image displayed by the display panel utilizing the display panel substrate.

The display panel substrate according to the present invention is preferably further arranged such that the light-blocking film is a black resist made of an organic resin.

According to the arrangement, a black resist having a lower reflection property is adopted as the light-blocking film. According to the arrangement, in a display panel utilizing the display panel substrate, the black resist provided on the insulating substrate absorbs a part of light incident from the outside of the display panel upon the insulating substrate, thereby reducing reflection of the light toward a viewer viewing a display image from the side of the display panel substrate. This makes it possible to enhance contrast of an image displayed by the display panel utilizing the display panel substrate.

The display panel substrate according to the present invention is preferably further arranged such that a plurality of color filters are formed over light transmission areas at least in the effective display area of the insulating substrate.

According to the arrangement, a plurality of color filters are formed over light transmission areas at least in the effective display area of the insulating substrate. This allows a display panel utilizing the display panel substrate to display a color image.

The display panel substrate according to the present invention is preferably further arranged such that the plurality of color filters are formed as the insulating film.

According to the arrangement, the color filters serve concurrently as an insulating film for protecting the first conductive wires, the second conductive wires, and the piezoelectric film. This eliminates, from the manufacture of a display panel utilizing the display panel substrate, the need to separately form an insulating film for protecting the first conductive wires, the second conductive wires, and the piezoelectric film. This allows a reduction in the number of manufacturing steps and a reduction in manufacturing cost.

The display panel substrate according to the present invention is preferably further arranged such that the insulating substrate is a flexible substrate containing a plastic material.

According to the arrangement, the insulating substrate is made of plastic. A display panel utilizing the display panel substrate can be dented with lower pressing force, as compared to a common substrate made of a material such as glass with a thickness in a range from 0.5 mm to 0.7 mm. Therefore, it is possible to realize a touch panel having a higher sensitivity.

In addition, it is possible to realize a touch panel capable of detecting coordinates even in a case where the display panel is reversely provided (i.e., the display panel substrate is provided on a back surface in relation to a viewing side).

The display panel substrate according to the present invention is preferably further arranged such that the insulating substrate has a light-transmitting property.

The arrangement makes it possible to realize the display panel substrate as a counter substrate facing a drive substrate.

The display panel substrate according to the present invention is preferably further arranged such that the insulating substrate has a circuit provided thereon for driving the display panel.

The arrangement makes it possible to realize the display panel substrate as a drive substrate.

Overlapping the first conductive wires and the second conductive wires on the source wires and the gate wires, respectively, is carried out by use of a high-accuracy stepper or an exposure apparatus such as a mirror projection exposure apparatus. This causes an amount of overlap misalignment between two wires to be sufficiently smaller than that obtained by using a common method for joining two substrates. This makes it possible to increase an aperture ratio.

For example, the joining of two substrates results in an amount of overlap misalignment of approximately ±5 µm in general. On the other hand, the use of an exposure apparatus results in an amount of overlap misalignment of ±1 µm or less in general. Therefore, the latter amount is sufficiently smaller than the former amount. An amount of overlap misalignment varies depending on the size of a mask and/or the size of a substrate. The former amount is an amount of overlap misalignment obtained as a result of the joining of a 365 by 460 mm glass substrate. On the other hand, the latter amount is an amount of overlap misalignment obtained as a result of pattern overlapping by a stepper method utilizing a stepper and a 6-inch mask.

The display panel substrate according to the present invention preferably further includes coordinate finding circuits that detect a voltage signal generated by pressing force and specify coordinates of a pushed position in accordance with the voltage signal thus detected.

According to the arrangement, the display panel substrate solely serves as a touch panel. This makes it unnecessary to separately provide an external coordinate finding circuit to a display panel into which the display panel substrate has been incorporated.

In order to attain the object, a display panel according to the present invention includes any one of the aforementioned display panel substrates.

The arrangement makes it possible to provide a display panel integrated with a touch panel. In other words, it is not necessary to separately join a touch panel with the display panel.

In order to attain the object, a display panel according to the present invention includes: any one of the aforementioned display panel substrates; and coordinate finding circuits, provided outside the display panel substrate, which detect a voltage signal generated by pressing force and specify coordinates of a pushed position in accordance with the voltage signal thus detected.

The arrangement makes it possible to provide a display panel integrated with a touch panel. In other words, it is not necessary to separately join a touch panel with the display panel.

The display panel according to the present invention, further includes: another substrate facing the display panel substrate; and a plurality of photo spacers for controlling a gap between the display panel substrate and the another substrate, wherein each of the photo spacers is provided in a position corresponding to a position on the display panel substrate in which position the piezoelectric film is formed.

According to the arrangement, each of the photo spacers for controlling a gap between the display panel substrate and another substrate is provided in a position corresponding to that position on the display panel substrate in which the piezoelectric film is formed. The arrangement improves pressing-force sensitivity since stronger pressing force is applied to the piezoelectric film via the photo spacer.

In order to attain the object, a display apparatus according to the present invention includes any one of the aforementioned display apparatuses.

The arrangement makes it possible to provide a display apparatus integrated with a touch panel. In other words, it is not necessary to separately join a touch panel with the display panel of the display apparatus.

In order to attain the object, an apparatus for manufacturing a display panel according to the present invention is a method for manufacturing any one of the aforementioned display panel substrates which method includes a step of simultaneously patterning the second conductive wires and the piezoelectric film.

The arrangement makes it possible to simplify manufacturing steps, thus making it possible to improve yield and reduce manufacturing costs.

Additional objects, features, and strengths of the present invention will be made clear by the description below. Further, the advantages of the present invention will be evident from the following explanation in reference to the drawings.

### Brief Description of Drawings

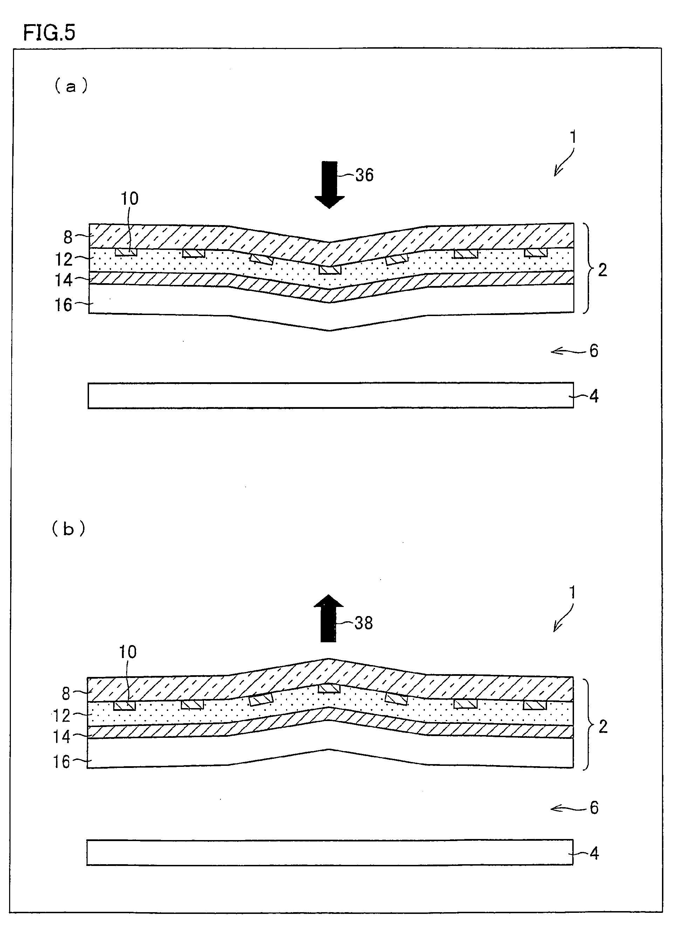

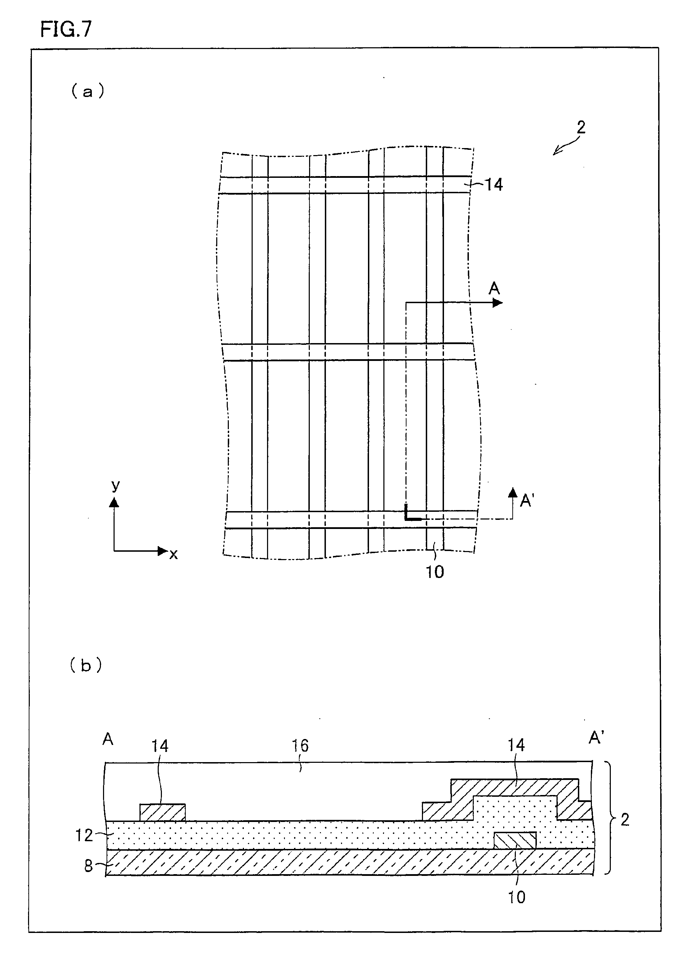

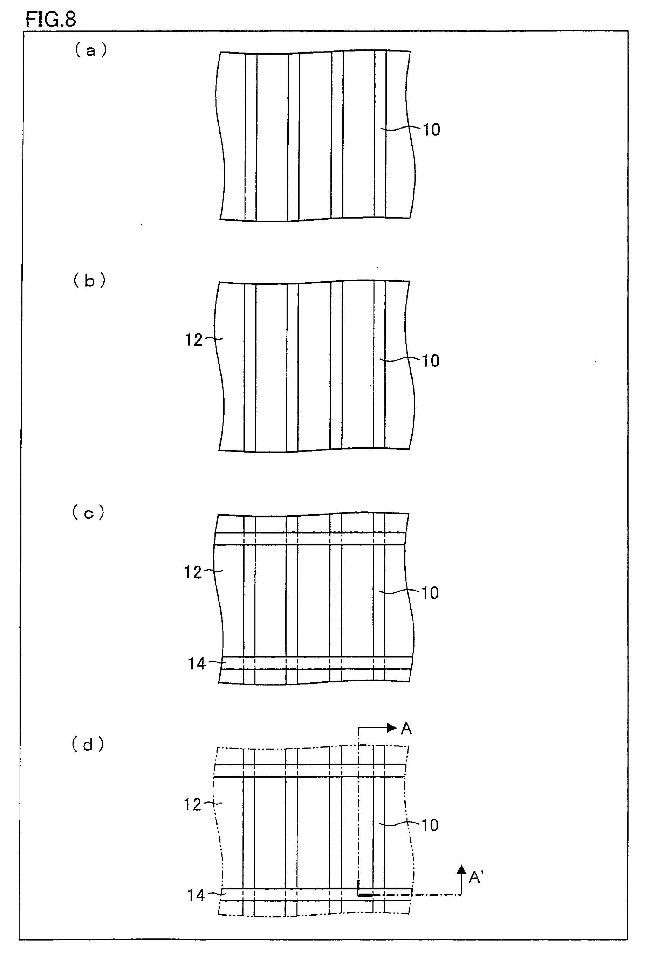

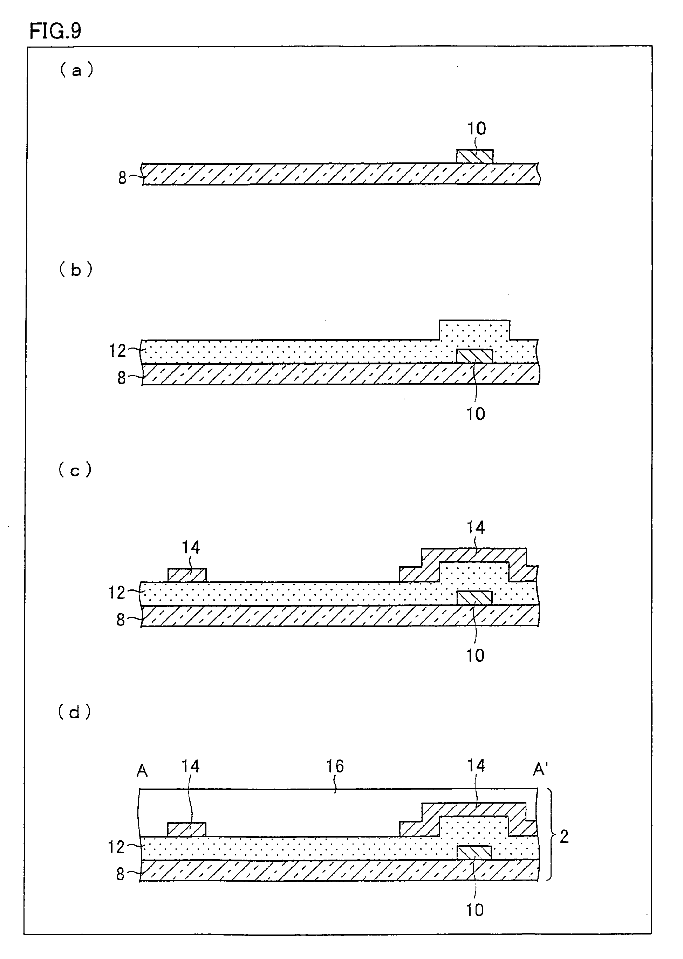

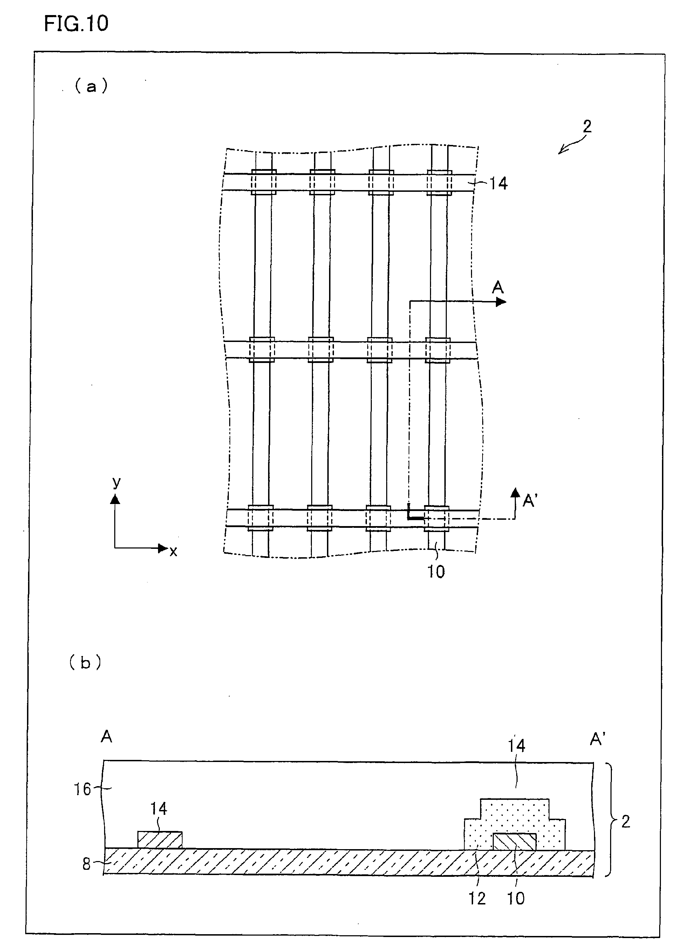

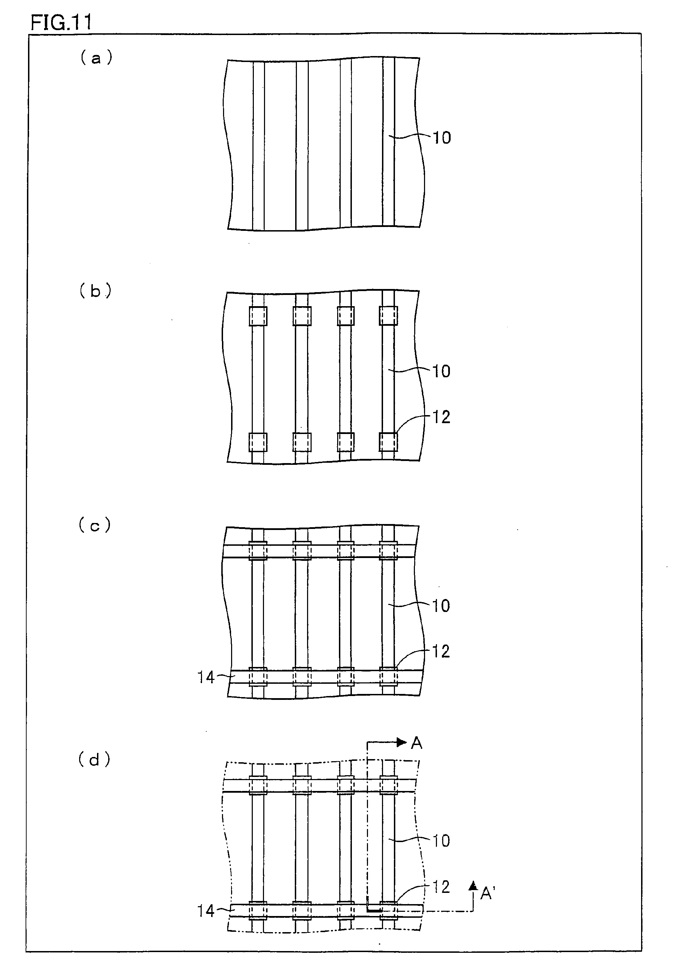

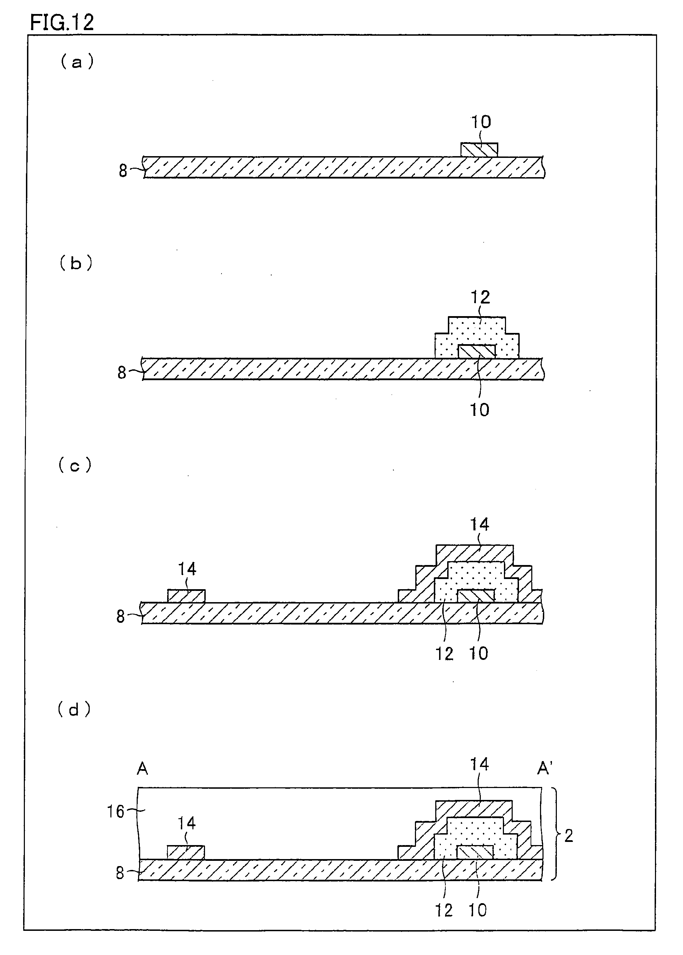

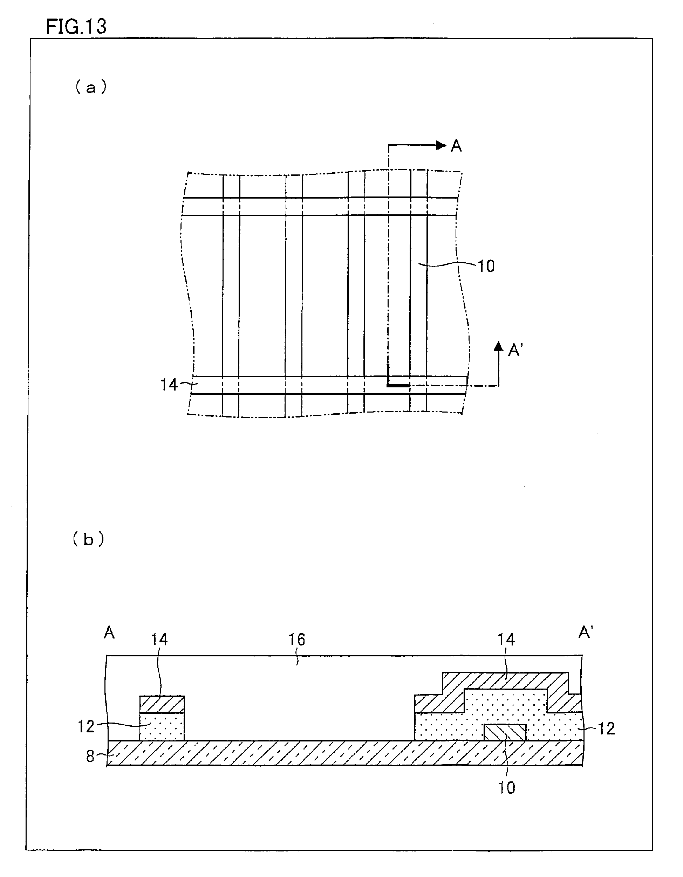

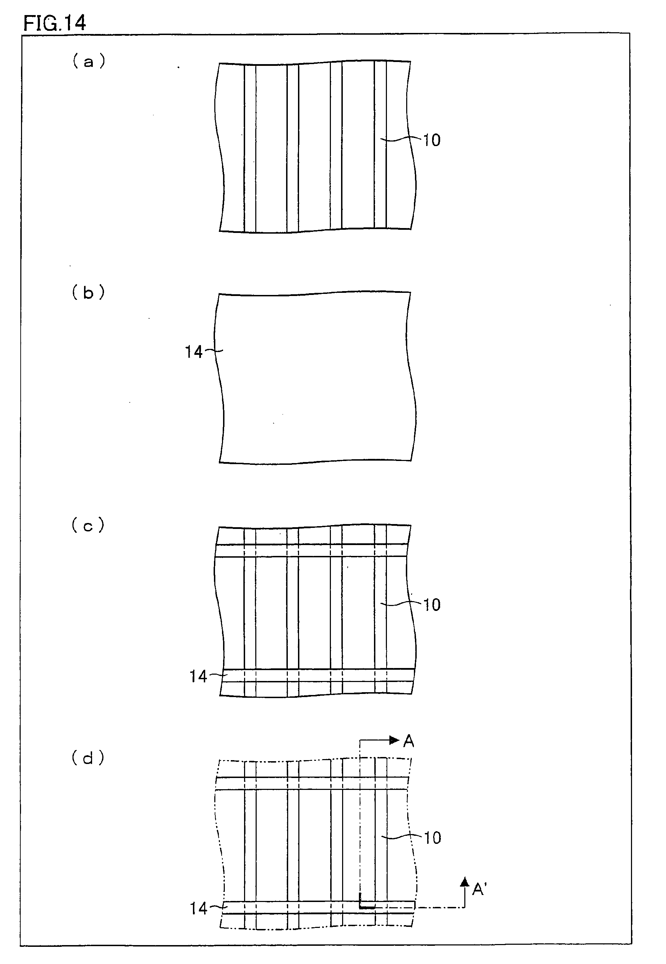

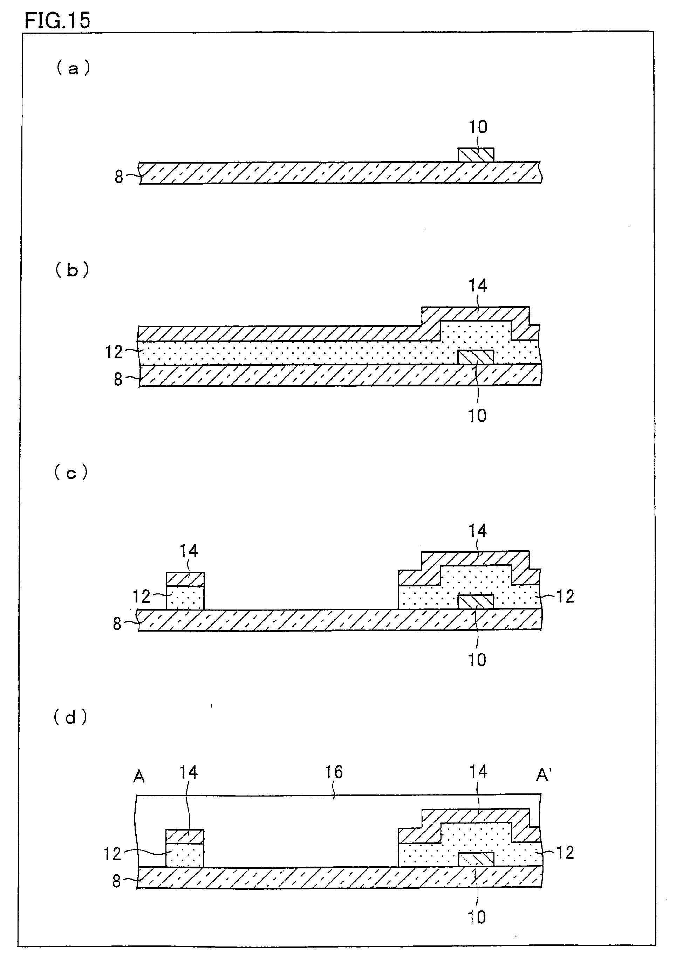

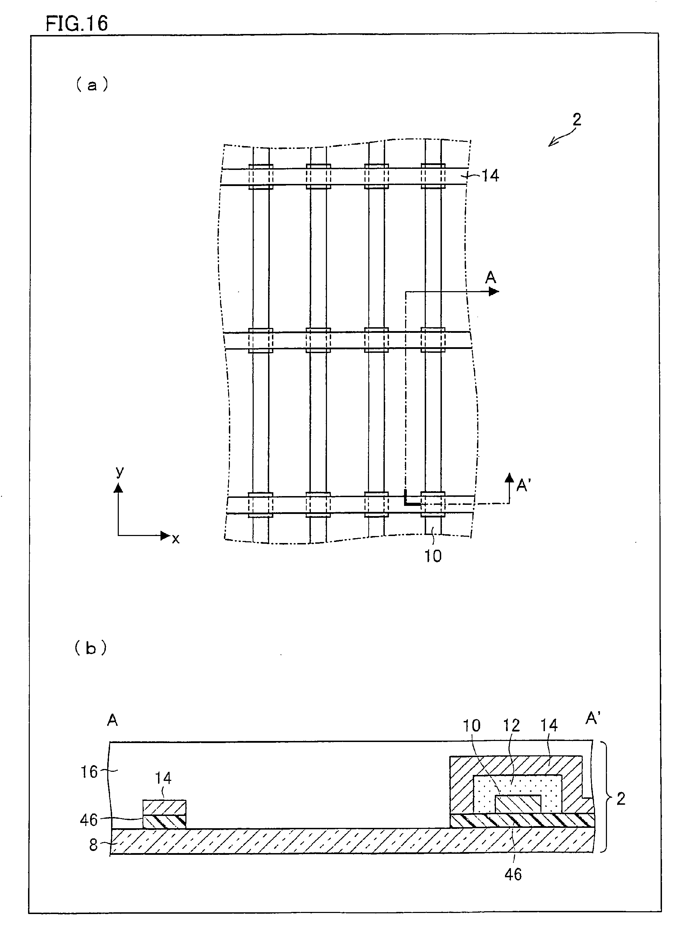

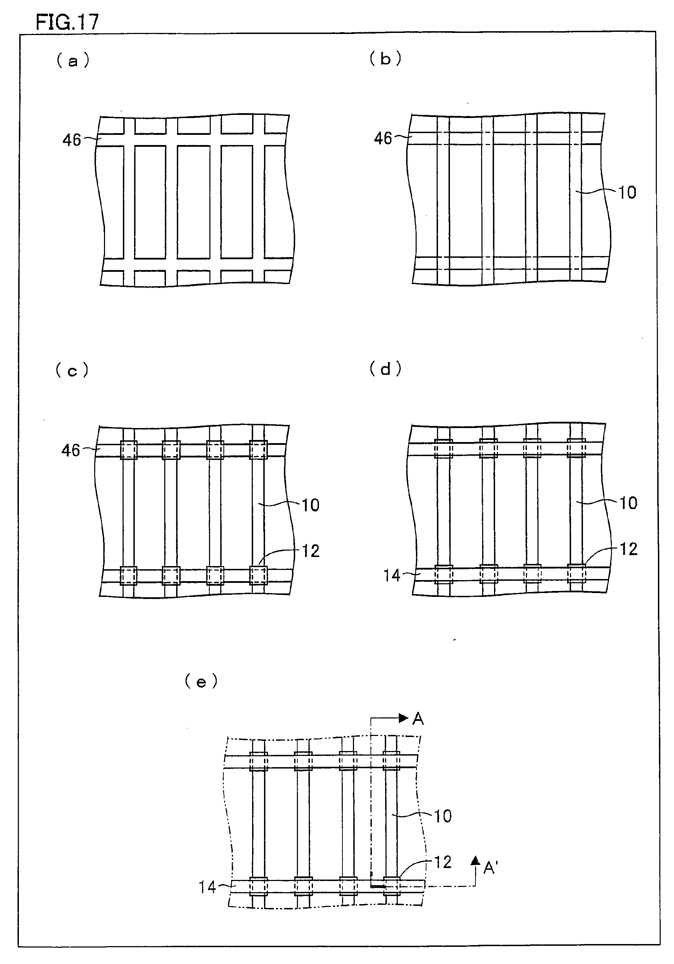

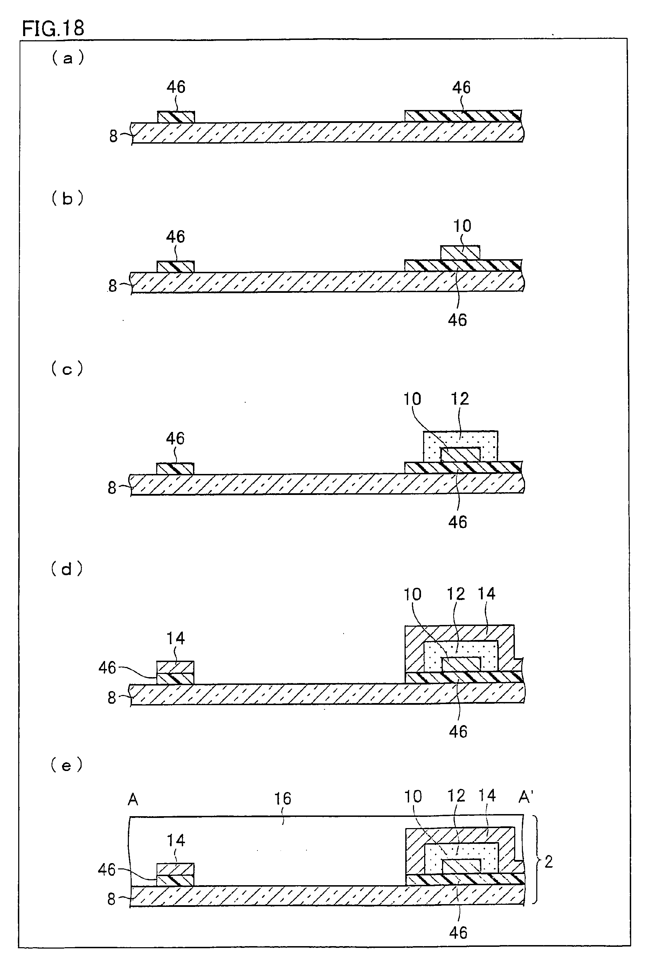

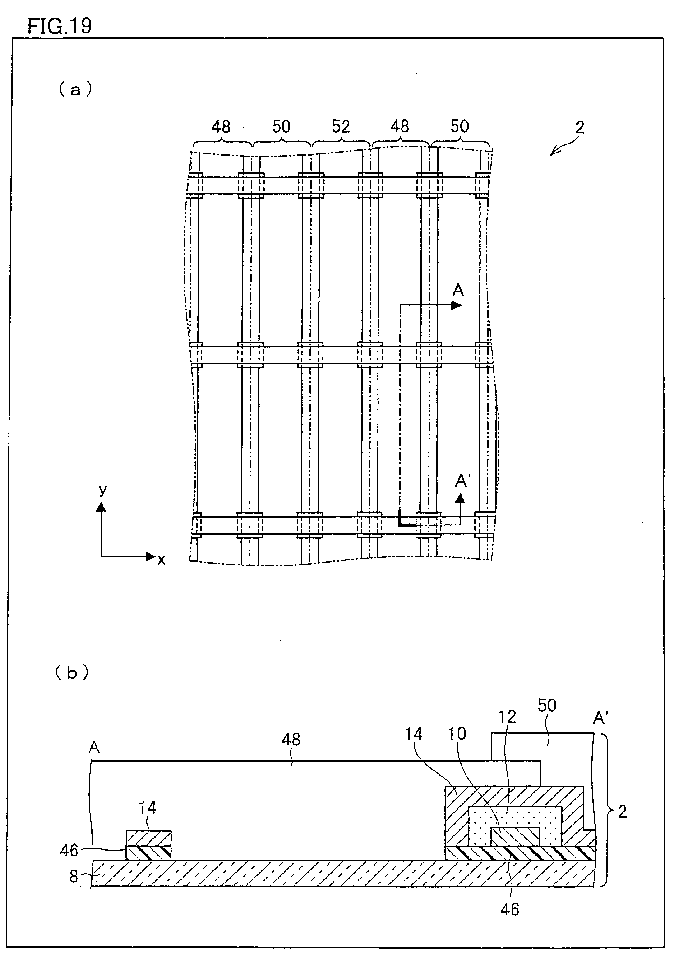

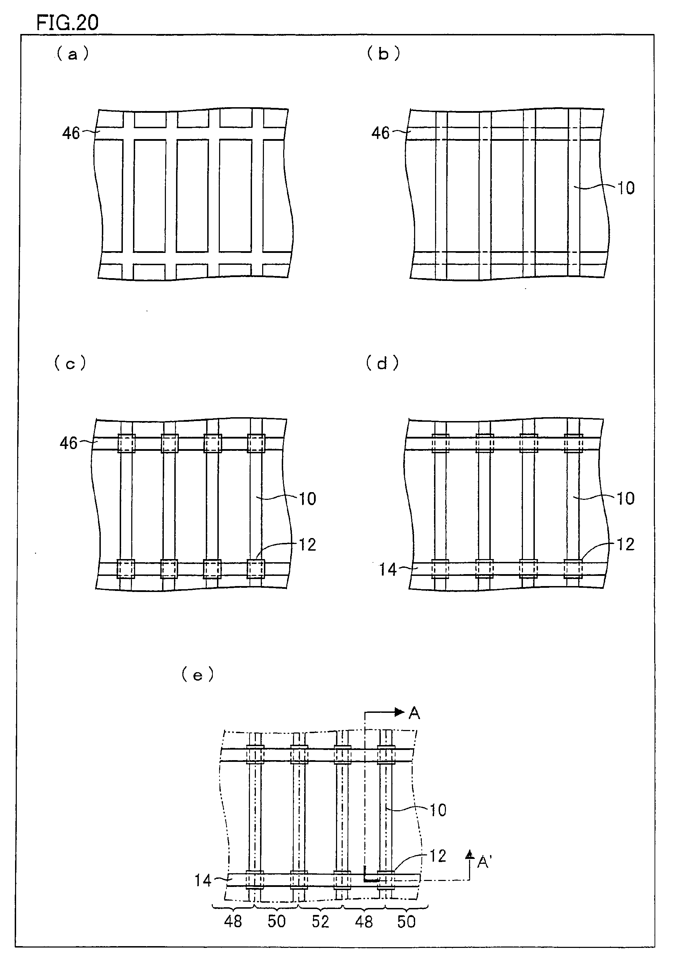

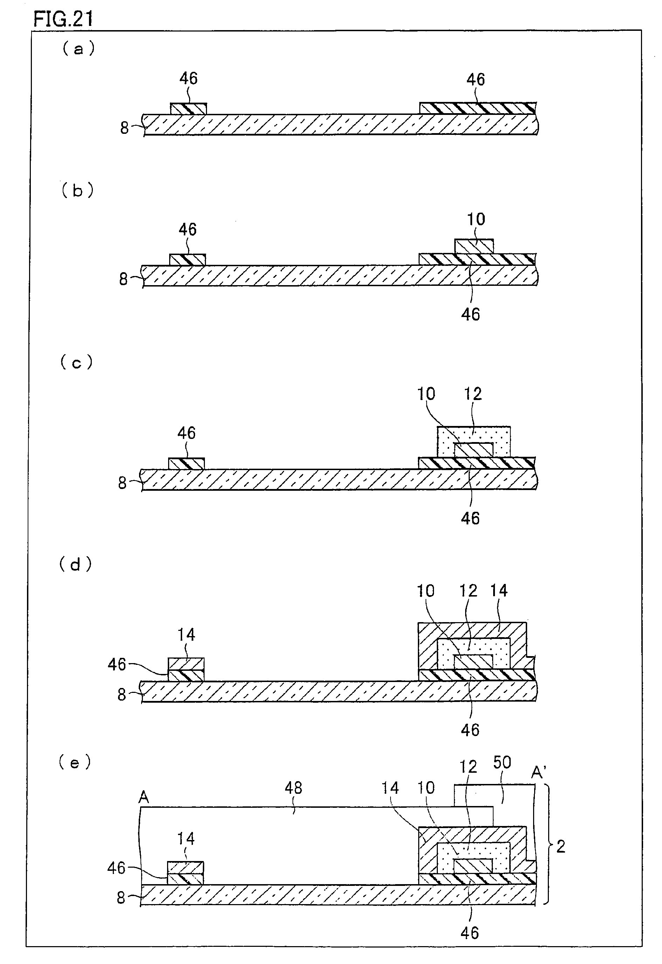

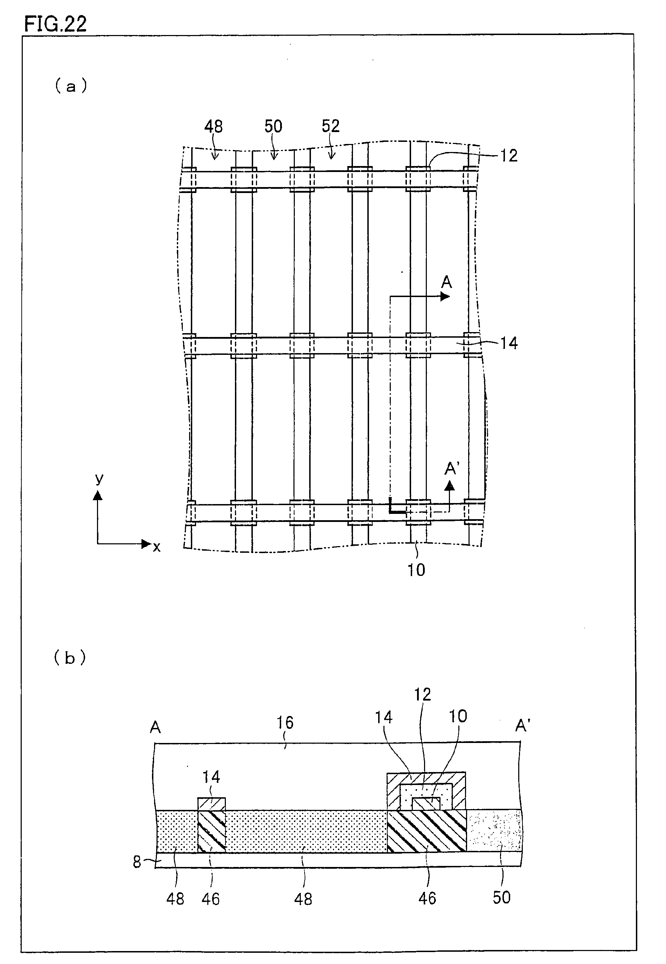

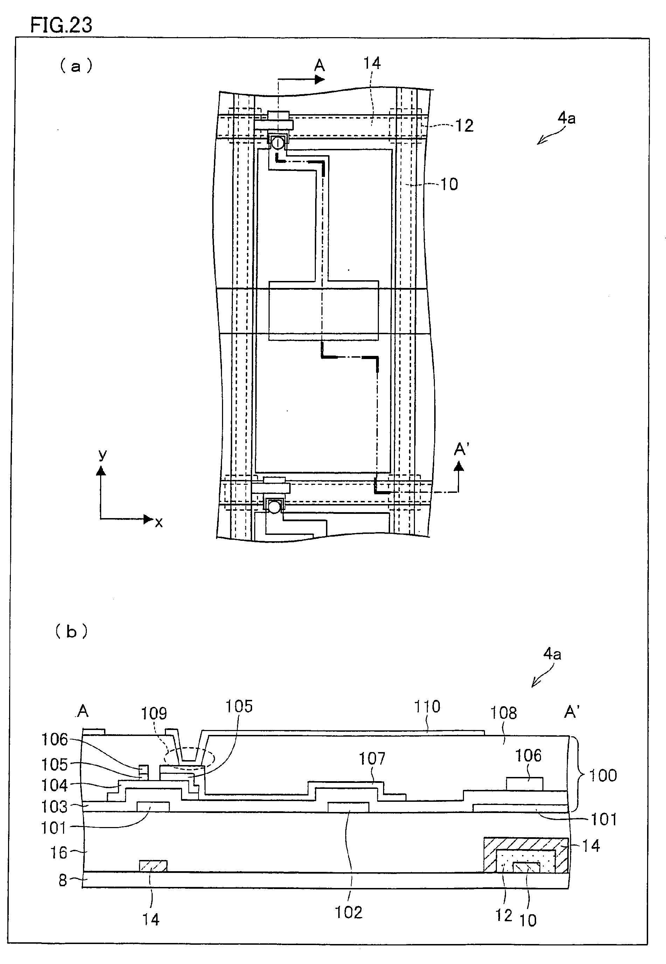

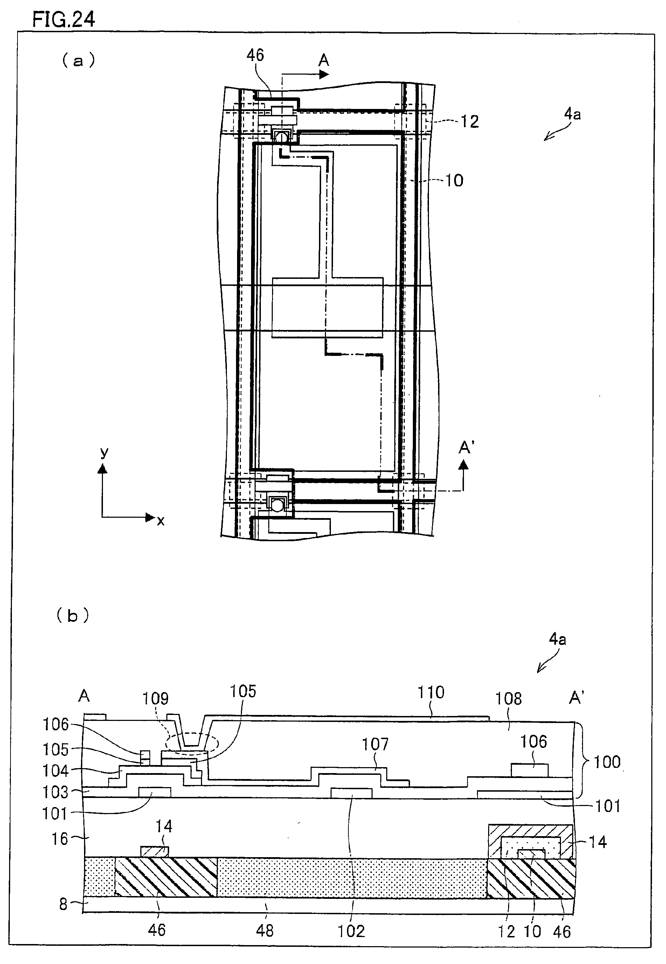

Fig. 1

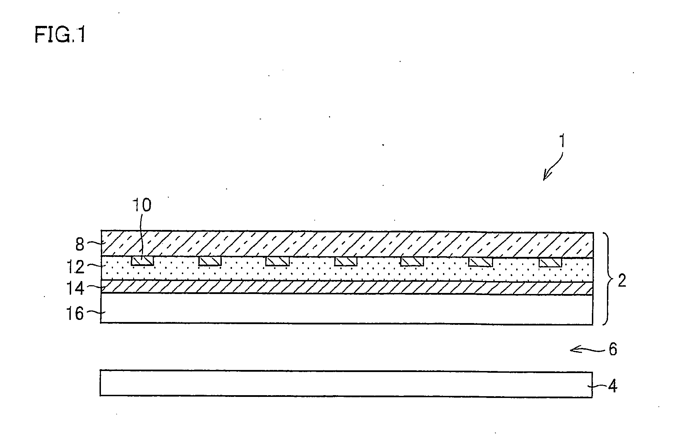

   Fig. 1 is a diagram illustrating an arrangement of a liquid crystal panel according to the present invention.
Fig. 2

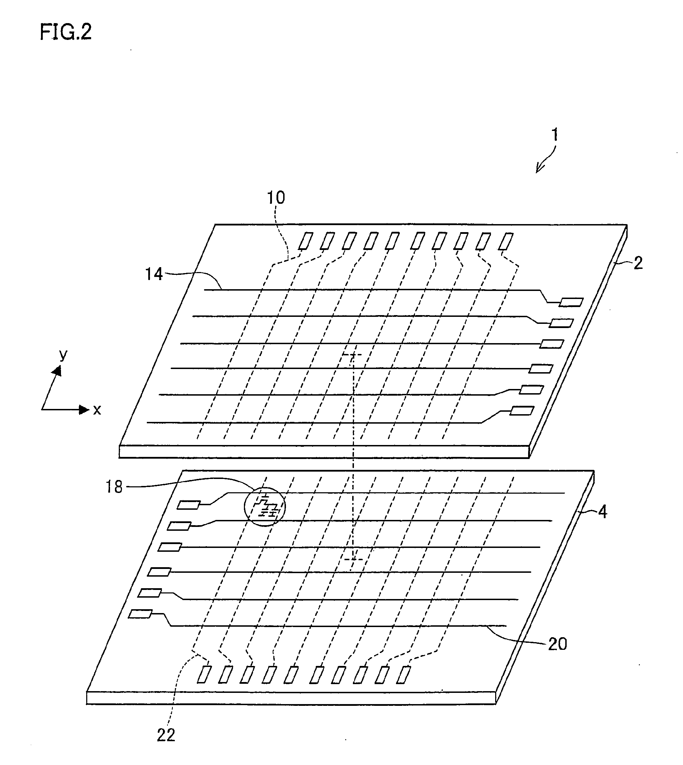

   Fig. 2 is a diagram illustrating wires formed on a counter substrate and wires formed on a TFT substrate.
Fig. 3

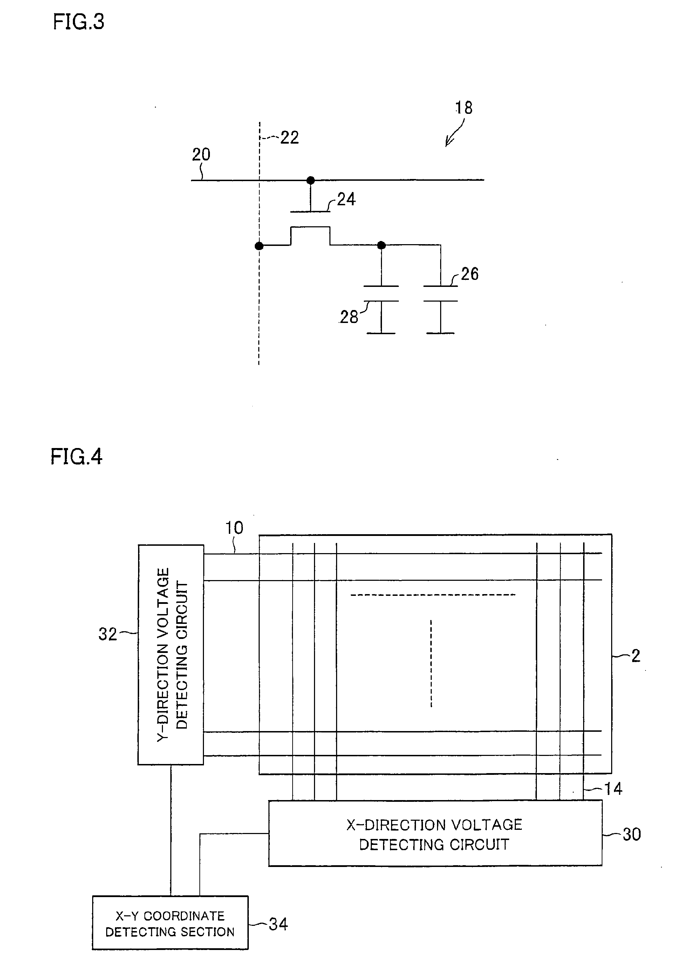

   Fig. 3 is a circuit diagram illustrating a structure of a liquid crystal pixel.
Fig. 4
   Fig. 4 is a diagram illustrating a form of connection between the counter substrate and circuits for detecting coordinates of a contact position on the counter substrate.
Fig. 5
   (a) of Fig. 5 is a diagram illustrating a counter substrate being deformed under load. (b) of Fig. 5 is a diagram illustrating the counter substrate, which has just been released from the load.
Fig. 6

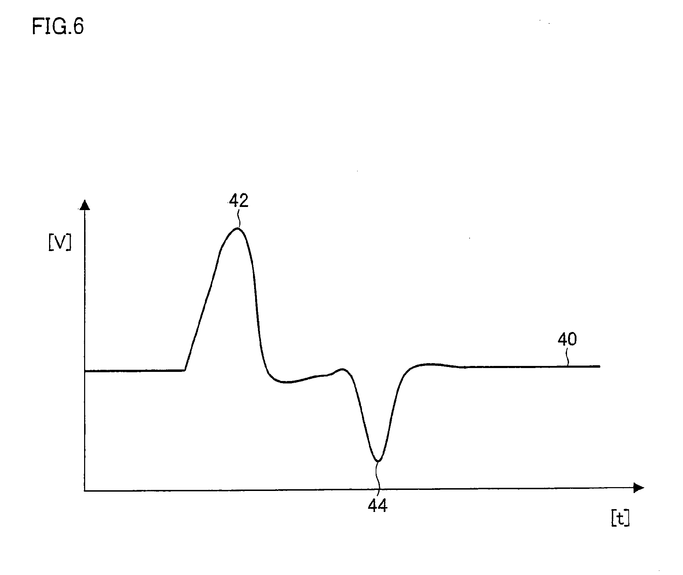

   Fig. 6 is a graph showing a temporal change in voltage caused by a push of the counter substrate.
Fig. 7
   (a) of Fig. 7 is a diagram illustrating a structure of a counter substrate. (b) of Fig. 7 is a cross-sectional view taken along the line A-A' of (a) of Fig. 7.
Fig. 8
   (a) through (d) of Fig. 8 are diagrams illustrating steps of manufacturing the counter substrate illustrated in Fig. 7.
Fig. 9
   (a) through (d) of Fig. 9 are cross-sectional views illustrating the steps of manufacturing the counter substrate illustrated in Fig. 7.
Fig. 10
   (a) of Fig. 10 is a diagram illustrating a structure of a counter substrate. (b) of Fig. 10 is a cross-sectional view taken along the line A-A' of (a) of Fig. 10.
Fig. 11
   (a) through (d) of Fig. 11 are diagrams illustrating steps of manufacturing the counter substrate illustrated in Fig. 10.
Fig. 12
   (a) through (d) of Fig. 12 are cross-sectional views illustrating the steps of manufacturing the counter substrate illustrated in Fig. 10.
Fig. 13
   (a) of Fig. 13 is a diagram illustrating a structure of a counter substrate made through patterning of piezoelectric films by use of metal wires as a mask. (b) of Fig. 13 is a cross-sectional view taken along the line A-A' of (a) of Fig. 13.
Fig. 14
   (a) through (d) of Fig. 14 are diagrams illustrating steps of manufacturing the counter substrate illustrated in Fig. 13.
Fig. 15
   (a) through (d) of Fig. 15 are cross-sectional views illustrating the steps of manufacturing the counter substrate illustrated in Fig. 13.
Fig. 16
   (a) of Fig. 16 is a diagram illustrating a structure of a counter substrate including a black matrix. (b) of Fig. 16 is a cross-sectional view taken along the line A-A' of (a) of Fig. 16.
Fig. 17
   (a) through (e) of Fig. 17 are diagrams illustrating steps of manufacturing the counter substrate illustrated in Fig. 16.
Fig. 18
   (a) through (e) of Fig. 18 are cross-sectional views illustrating the steps of manufacturing the counter substrate illustrated in Fig. 16.
Fig. 19
   (a) of Fig. 19 is a diagram illustrating a structure of a counter substrate including color filters. (b) of Fig. 19 is a cross-sectional view taken along the line A-A' of (a) of Fig. 19.
Fig. 20
   (a) through (e) of Fig. 20 are diagrams illustrating steps of manufacturing the counter substrate illustrated in Fig. 19.
Fig. 21
   (a) through (e) of Fig. 21 are diagrams illustrating the steps of manufacturing the counter substrate illustrated in Fig. 19.
Fig. 22
   (a) of Fig. 22 is a diagram illustrating another structure of the counter substrate including color filters. (b) of Fig. 22 is a cross-sectional view taken along the line A-A' of (a) of Fig. 22.
Fig. 23
   (a) of Fig. 23 is a diagram illustrating a structure of a TFT substrate having a touch panel structure. (b) of Fig. 23 is a cross-sectional view taken along the line A-A' of (a) of Fig. 23.
Fig. 24
   (a) of Fig. 24 is a diagram illustrating another structure of the TFT substrate having a touch panel structure. (b) of Fig. 24 is a cross-sectional view taken along the line A-A' of (a) of Fig. 24.
Fig. 25

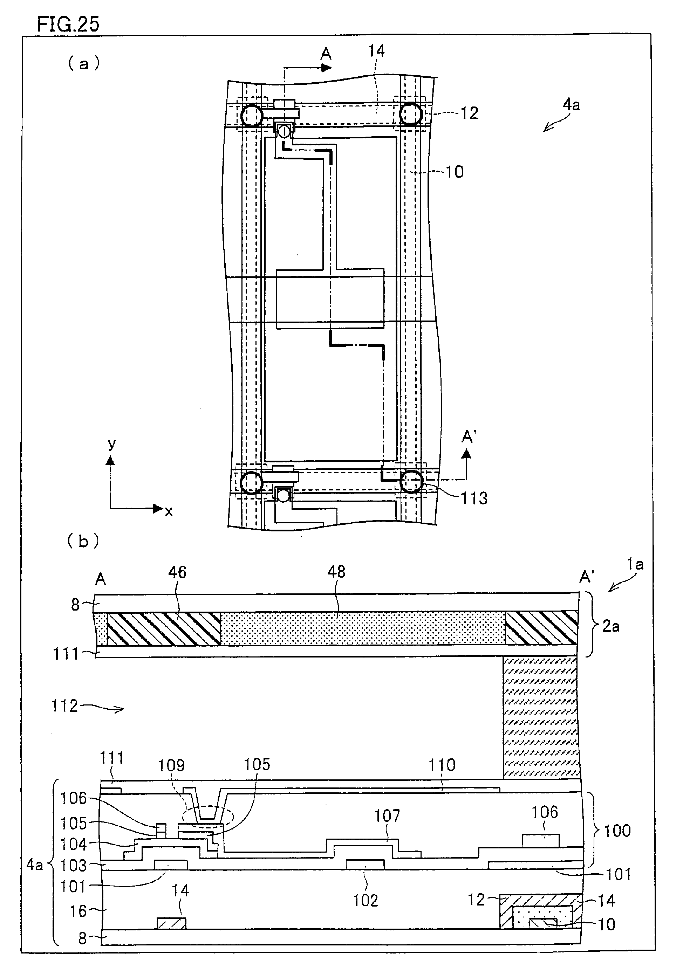

   Fig. 25 is a diagram illustrating an arrangement of a liquid crystal panel including cell gap controlling columns.

### [Reference Numerals]

- 1 and 1a: Liquid crystal panel (display panel)
- 2 and 2a: Counter substrate
- 4 and 4a: TFT substrate
- 6: Liquid crystal
- 8: Glass substrate (insulating substrate)
- 10: Metal wire (first conductive wire)
- 12: Piezoelectric film
- 14: Metal wire (second conductive wire)
- 16: Protecting film
- 18: Liquid crystal pixel
- 20: Gate bus wire
- 22: Source bus wire
- 24: TFT element
- 26: Auxiliary capacitor
- 28: Liquid crystal capacitor
- 30: X-direction voltage detecting circuit
- 32: Y-direction voltage detecting circuit
- 34: X-Y coordinate detecting section
- 46: Black matrix (light-blocking film)
- 48: Red resist (color filter)
- 50: Blue resist (color filter)
- 52: Green resist (color filter)
- 100: TFT circuit (driving circuit)
- 101: Gate electrode/wire
- 102: Auxiliary capacitor wire
- 103: Gate insulating film
- 104: Semiconductor layer
- 105: Contact layer
- 106: Source electrode/wire
- 107: Drain electrode/wire
- 108: Interlayer insulating film
- 109: Contact hole
- 110: Transparent picture electrode
- 111: Alignment film
- 112: Liquid crystal layer
- 113 spacer): Cell gap controlling column (photo

### Description of Embodiments

The following describes an embodiment of the present invention, with reference to Figs. 1 through 25.

### (Arrangement Example of Liquid Crystal Panel 1)

Fig. 1 is a diagram illustrating an arrangement of a liquid crystal panel 1 (display panel) according to the present invention. As illustrated in Fig. 1, the liquid crystal panel 1 is schematically constituted by: a counter substrate 2 (display panel substrate) having a touch panel function; and a TFT substrate 4 having TFT elements formed thereon. Sandwiched between the counter substrate 2 and the TFT substrate 4 is liquid crystal 6 (not illustrated).

As illustrated in Fig. 1, the counter substrate 2 includes a glass substrate 8 (insulating substrate), metal wires 10 (first conductive wires), a piezoelectric film 12, metal wires 14 (second conductive wires), and a protecting film 16. The arrangement, which is described later in detail, allows the counter substrate 2 to serve as a touch panel.

### (Wires on Substrate)

Fig. 2 illustrates respective wires formed on the counter substrate 2 and the TFT substrate 4. Fig. 2 is a diagram illustrating wires formed on the counter substrate 2 and wires formed on the TFT substrate 4.

The metal wires 10 and the metal wires 14 are formed on the counter substrate 2 so that the metal wires 10 and the metal wires 14 intersect with each other. The metal wires 10 are disposed in a Y direction of the counter substrate 2 whereas the metal wires 14 are disposed in an X direction perpendicular to the Y direction. The metal wires 10 and the metal wires 14 are all connected respectively to terminals formed on a picture frame of the counter substrate 2.

On the other hand, the TFT substrate 4 has gate bus wires 20 and source bus wires formed thereon so as to intersect with each other. Formed at an intersection of each gate bus wire 20 and each source bus wire 22 is a liquid crystal pixel 18.

The liquid crystal panel 1 further includes a detecting circuit, a flexible printed circuit board, color filters, a polarizing plate, an alignment film, common electrodes, a sealing material, etc., none of which are illustrated in Fig. 2. In the example illustrated in Fig. 2, the number of the metal wires 10 is equal to that of the source bus wires 22. Likewise, the number of the metal wires 14 is equal to that of the gate bus wires 20.

One metal wire 10 does not necessarily correspond to one terminal. Alternatively, several metal wires 10 can be connected to one terminal. The same applies to the metal wires 14. The less the respective numbers of metal wires 10 connected to one terminal and metal wires 14 connected to one terminal become, the higher the detected resolution of a contact position on the counter substrate 2 becomes. Therefore, a relation of connection of the metal wires 10 and the metal wires 14 to terminals can be freely set within an acceptable range of desired resolution of coordinate detection.

Fig. 3 illustrates an arrangement of a liquid crystal pixel 18. Fig. 3 is a circuit diagram illustrating a structure of a liquid crystal pixel 18. As illustrated in Fig. 3, the liquid crystal pixel 18 includes a gate bus wire 20, a source bus wire 22, a TFT element 24, an auxiliary capacitor 26, and a liquid crystal capacitor 28. A further detailed description is omitted since the structure is publicly known.

### (Detection of Voltage)

Fig. 4 illustrates various circuits necessary for the counter substrate 2 to serve as a touch panel. Fig. 4 is a diagram illustrating a form of connection between the counter substrate 2 and circuits for detecting coordinates of a contact position on the counter substrate 2. As illustrated in Fig. 4, the counter substrate 2 is connected to both an X-direction voltage detecting circuit 30 and a Y-direction voltage detecting circuit 32. Both of the circuits are further connected to an X-Y coordinate detecting section 34.

The X-direction voltage detecting circuit 30 detects the intensity of voltages propagating through the metal wires 14, and outputs a result of the detection to the X-Y coordinate detecting section 34. On the other hand, the Y-direction voltage detecting circuit 32 detects the intensity of voltages propagating through the metal wires 10, and outputs a result of the detection to the X-Y coordinate detecting section 34. In accordance with the voltages thus supplied, the X-Y coordinate detecting section 34 detects a pushed position (coordinates) on the counter substrate 2.

As illustrated in (a) and (b) of Fig. 5, the counter substrate 2 changes its shape under load. (a) of Fig. 5 is a diagram illustrating a counter substrate 2 being deformed under load. (b) of Fig. 5 is a diagram illustrating the counter substrate, which has just been released from the load. A voltage generated by an area of the piezoelectric film 12 located in a position on the counter substrate 2 where load was applied varies as shown in Fig. 6, for example. Fig. 6 is a graph showing a temporal change in voltage caused by a push of the counter substrate 2.

Upon application of load to the counter substrate 2 (see an arrow 36 of (a) of Fig. 5), the counter substrate 2 is dented toward the TFT substrate 4. This causes a positive peak 42 on a voltage waveform 40 of Fig. 6. Upon release from the applied load (see an arrow 38 of (b) of Fig. 5), the counter substrate 2 is bent in the opposite direction due to reaction against the applied load. This causes a negative peak 44 in the voltage waveform 40 of Fig. 6. The peaks 42 and 44 are detected by both the X-direction voltage detecting circuit 30 and the Y-direction voltage detecting circuit 32.

### (Details of Structure of Counter Substrate 2)

Fig. 7 illustrates an arrangement example of the counter substrate 2. (a) of Fig. 7 is a diagram illustrating a structure of a counter substrate 2. (b) of Fig. 7 is a cross-sectional view taken along the line A-A' of (a) of Fig. 7.

On the counter substrate 2 of Fig. 7 (see (a) of Fig. 7), a plurality of metal wires 10 and a plurality of metal wires 14 intersect with each other. Formed between the metal wires 10 and the metal wires 14 is a piezoelectric film 12. As illustrated in (b) of Fig. 7, specifically, the metal wires 10 are formed directly on a glass substrate 8 that constitutes the counter substrate 2. The piezoelectric film 12 is formed so as to cover the metal wires 10. The piezoelectric film 12 is also formed not only on the metal wires 10 but also on other areas of the glass substrate 8 where no metal wires 10 are formed. The metal wires 14 are formed on the piezoelectric film 12 so as to perpendicularly intersect with the metal wires 10. Further formed on an entire surface of the counter substrate 2 except for terminal sections for electrical connection with the coordinate detecting circuits is a protecting film 16 for protecting the piezoelectric film 12 and the metal wires 14.

As described above, a counter substrate 2 that constitutes a liquid crystal panel 1 includes: a glass substrate 8; metal wires 10 formed on the glass substrate 8; metal wires 14 intersecting with the metal wires 10 via a piezoelectric film 12 formed on the glass substrate 8; a protecting film 16 for protecting the metal wires 10, the metal wires 14, and the piezoelectric film 12 at least in an effective display area of the counter substrate 2. The "effective display area" refers to an area in which an image is displayed, i.e., an area that is effective as a display screen.

According to the arrangement, when subjected to load, the piezoelectric film 12 generates a voltage in accordance with the intensity of the load. The voltage thus generated is detected via the metal wires 14 and the metal wires 10, which perpendicularly intersect with each other, by the X-direction voltage detecting circuit 30 connected to the metal wires 14 and the Y-direction voltage detecting circuit 32 connected to the metal wires 10.

The arrangement allows the counter substrate 2 to serve as a so-called touch panel that detects a contact position. In other words, the use of the counter substrate 2 makes it possible to realize a liquid crystal panel 1 housing a touch panel. Since the liquid crystal panel 1 already has a touch panel function, it is not necessary to separately join a touch panel with a display surface of the liquid crystal panel 1.

This makes it possible to cause the liquid crystal panel 1 utilizing the counter substrate 2 to be thinner than a conventional liquid crystal panel 1. In addition, this allows a reduction in manufacturing cost of the liquid crystal display panel 1. In summary, the arrangement does not cause an increase in size of the liquid crystal panel 1 constituted by the counter substrate 2, while allowing integration of a touch panel into the liquid crystal panel 1.

According to the arrangement, the liquid crystal panel 1 can be manufactured by joining the counter substrate 2 onto the TFT substrate 4 only once. This makes it possible to suppress a decrease in aperture ratio, in comparison with a case where a separate touch panel is joined with a display panel.

According to the arrangement, furthermore, the piezoelectric film 12 does not need to be provided in the picture frame of the counter substrate 2. Therefore, the arrangement does not cause an increase in size of the liquid crystal panel 1 constituted by the counter substrate 2.

### <Example 1 of Arrangement/Manufacturing Steps>

### (Steps of Manufacturing Counter Substrate)

(a) through (d) of Fig. 8 and (a) through (d) of Fig. 9 illustrate steps of manufacturing the counter substrate 2 of Fig. 7. (a) through (d) of Fig. 8 are diagrams illustrating the steps of manufacturing the counter substrate 2 illustrated in Fig. 7. (a) through (d) of Fig. 9 are cross-sectional views illustrating the steps of manufacturing the counter substrate 2 illustrated in Fig. 7. A cross section taken along the line A-A' of (d) of Fig. 8 corresponds to (d) of Fig. 9. (a) through (c) of Fig. 8 correspond to (a) through (c) of Fig. 9, respectively, as is the case with the relation between (d) of Fig. 8 and (d) of Fig. 9.

In the manufacture of the counter substrate 2 of Fig. 7, first, the metal wires 10 are formed on the glass substrate 8 (see (a) of Fig. 8 and (a) of Fig. 9). Specifically, a metal film made of metal such as titanium is formed on the glass substrate 8 by DC magnetron sputtering so as to have a thickness of approximately 200 nm. The metal film thus formed is shaped by photolithography into metal wires 10 each having a desired shape. Dry etching utilizing tetrafluoromethane is adopted herein as an etching method.

A terminal section (not illustrated) for electrical connection with the Y-direction voltage detecting section 30 is also formed simultaneously with the formation of the metal wires 10.

The piezoelectric film 12 is formed after the metal wires 10 are formed (see (b) of Fig. 8 and (b) of Fig. 9). Specifically, a film of piezoelectric material (ZnO: zinc oxide) is formed at 250°C by electron cyclotron resonance (ECR) sputtering so as to have a thickness in a range from approximately 500 nm to 800 nm. Thus, the piezoelectric film 12 is formed entirely on the glass substrate 8 so as to completely cover the metal wires 10. That part of the film of piezoelectric material which has been formed on the terminal section is removed in advance by mask deposition or photolithography (not illustrated).

Wet etching utilizing an organic acid such as acetic acid or oxalic acid as an etchant is adopted herein as an etching method.

The metal wires 14 are formed after the piezoelectric film 12 is formed (see (c) of Fig. 8 and (c) of Fig. 9). Specifically, a metal film made of metal such as molybdenum is formed on the piezoelectric film 12 by DC magnetron sputtering so as to have a thickness of approximately 200 nm. The metal film thus formed is shaped by photolithography into metal wires 14 each having a desired shape. Dry etching utilizing tetrafluoromethane is adopted herein as an etching method.

Simultaneously, the piezoelectric film 12 under the metal film made of molybdenum is also etched by the dry etching utilizing tetrafluoromethane. However, the etching rate of zinc oxide of the piezoelectric film 12 is sufficiently lower than that of molybdenum. Therefore, the piezoelectric film 12 is not completely removed by dry etching, but remained as a film having a sufficient thickness.

A terminal section (not illustrated) for electrical connection with the X-direction voltage detecting section 30 is also formed simultaneously with the formation of the metal wires 14.

As well as being made of the aforementioned titanium, the metal wires 10 can be made of a titanium alloy; ITO or another conductive metal oxide; a metal material such as tantalum, molybdenum, aluminum, or an alloy containing any of the metals; or a laminated body thereof. In addition, as well as being made of the aforementioned molybdenum, the metal wires 14 can be made of titanium or a titanium alloy; ITO or another conductive metal oxide; a metal material such as tantalum, aluminum, or an alloy containing any of the metals; or a laminated body thereof. In the formation of the piezoelectric film 12, it is possible to use a material such as poly(vinylidene fluoride) as a piezoelectric material. Contact layers can be additionally provided between the piezoelectric film 12 and the metal wires 10 and between the piezoelectric film 12 and the metal wires 14, respectively, so as to reduce the resistance of contact between the piezoelectric material and the material of each kind of metal wire.

More preferably, at least either the metal wires 10 or the metal wires 14 are formed from a metal material having a low reflection property (i.e., chrome, chrome oxide, tantalum, tantalum nitride, a laminated film of any combination of the metals, or the like). According to the arrangement, in the liquid crystal panel 1 utilizing the counter substrate 2, a low-reflectance material provided on the glass substrate 8 of the counter substrate 2 absorbs a part of light incident from the outside of the liquid crystal panel 1 upon the glass substrate 8, thereby reducing reflection of the light toward a viewer viewing a display image from the side of the counter substrate 2. This makes it possible to enhance contrast of an image displayed by the liquid crystal panel 1 utilizing the counter substrate 2.

The protecting film 16 is formed after the metal wires 14 are formed (see (d) of Fig. 8 and (d) of Fig. 9). Specifically, a transparent resin film having photosensitivity is formed by spin coating so as to have a thickness of approximately 1000 nm. Thus, the protecting film 16 is formed on the entire surface of the counter substrate 2 so as to completely cover the metal wires 14 and the piezoelectric film 12. Parts of the transparent resin film that have been formed on the terminal sections are removed by photolithography, whereby openings are provided respectively on the terminal sections.

The protecting film 16 can be also formed by forming a transparent inorganic film (SiNx: silicon nitride or SiO₂: silicon dioxide) by sputtering or chemical vapor deposition (CVD) and then patterning the transparent inorganic film.

If necessary, counter electrodes (not illustrated) are formed after the protecting film 16 is formed (not illustrated). The counter electrodes can be formed by forming a film of ITO (indium tin oxide) and then patterning the film of ITO. In the manufacture of the liquid crystal panel 1, generally, it is necessary to form the counter electrodes. However, in a case where the liquid crystal panel 1 is an IPS (In Place Switching) liquid crystal panel, or in a case where the counter substrate 2 constitutes an organic EL panel, it is not necessary to form the counter electrodes.

### <Example 2 of Arrangement/ Manufacturing Steps>

### (Example of Case Where Opening Is Provided at Least in Display Area Surrounded by Wires)

From a viewpoint of transmittance, it is advantageous to provide an opening at least in a display area surrounded by two metal wires 10 and two metal wires 14. Furthermore, it is preferable to form a piezoelectric film 12 at an intersection of each metal wire 10 and each metal wire 14. Fig. 10 illustrates a counter substrate 2 thus arranged. (a) of Fig. 10 is a diagram illustrating a structure of the counter substrate 2. (b) of Fig. 10 is a cross-sectional view taken along the line A-A' of (a) of Fig. 10.

In the case of the counter substrate 2 of Fig. 10, no piezoelectric films 12 are formed in areas each surrounded by two metal wires 10 and two metal wires 14. This makes it possible to increase light transmittance, in comparison with a case where piezoelectric films 12 are formed in the areas. Therefore, it is possible to reduce the amount of light with which a backlight irradiates the liquid crystal panel 1 which amount of light is required for obtaining an image display having the same luminance (brightness).

(a) through (d) of Fig. 11 and (a) through (d) of Fig. 12 illustrate steps of manufacturing the counter substrate 2 illustrated in Fig. 10. (a) through (d) of Fig. 11 are diagrams illustrating the steps of manufacturing the counter substrate 2 illustrated in Fig. 10. (a) through (d) of Fig. 12 are cross-sectional views illustrating the steps of manufacturing the counter substrate 2 illustrated in Fig. 10. A cross section taken along the line A-A' of (d) of Fig. 11 corresponds to (d) of Fig. 12. (a) through (c) of Fig. 11 correspond to (a) through (c) of Fig. 12, respectively, as is the case with the relation between (d) of Fig. 11 and (d) of Fig. 12.

In the manufacture of the counter substrate 2 of Fig. 10, first, the metal wires 10 are formed on the glass substrate 8 (see (a) of Fig. 11 and (a) of Fig. 12). Detailed description of a concrete method is omitted since it is the same as that illustrated in (a) of Fig. 8 and (a) of Fig. 9.

The piezoelectric films 12 are formed after the metal wires 10 are formed (see (b) of Fig. 11 and (b) of Fig. 12). Specifically, a film of piezoelectric material (ZnO: zinc oxide) is formed at 250°C by electron cyclotron resonance (ECR) sputtering so as to have a thickness in a range from approximately 500 nm to 800 nm. The film of piezoelectric material thus formed is shaped by photolithography into piezoelectric films 12 each having a desired shape. Wet etching utilizing an organic acid such as acetic acid or oxalic acid as an etchant is adopted herein as an etching method for forming the piezoelectric films 12. Thus, each of the piezoelectric films 12 is formed only in a position corresponding to an intersection of a metal wire 10 and a metal wire 14.

Simultaneously, parts of the film of piezoelectric material that have been formed on the terminal sections are removed (not illustrated).

The metal wires 14 are formed after the piezoelectric films 12 are formed (see (c) of Fig. 11 and (c) of Fig. 12). Specifically, a metal film made of metal such as molybdenum are formed on the glass substrate 8 and the piezoelectric films 12 by DC magnetron sputtering so as to have a thickness of approximately 200 nm. The metal film thus formed is shaped by photolithography into metal wires 14 each having a desired shape. Each metal wire 14 is formed on a piezoelectric film 12 at its intersection with a metal wire 10. In the other areas, each metal wire 14 is formed directly on the glass substrate 8.

Dry etching utilizing tetrafluoromethane is adopted herein as an etching method for forming the metal wires 14. Titanium of which the metal wires 10 are made is also etched by tetrafluoromethane. In view of this, an EPD (End Point Detector) or the like is used to monitor a degree of progress of etching, thereby controlling the etching of molybdenum of which the metal wires 14 are made. This prevents disappearance and disconnection of the metal wires 10 made of titanium.

The terminal section (not illustrated) for electrical connection with the Y-direction voltage detecting section 32 is also formed simultaneously with the formation of the metal wires 14.

### (Material of Metal Wires)

As well as being made of the aforementioned titanium, the metal wires 10 can be made of a titanium alloy; ITO or another conductive metal oxide; a metal material such as tantalum, molybdenum, aluminum, or an alloy containing any of the metals; or a laminated body thereof. In addition, as well as being made of the aforementioned molybdenum, the metal wires 14 can be made of titanium or a titanium alloy; ITO or another conductive metal oxide; a metal material such as tantalum, aluminum, or an alloy containing any of the metals; or a laminated body thereof. In the formation of the piezoelectric films 12, it is possible to use a material such as poly(vinylidene fluoride) as a piezoelectric material.

A contact layer can be additionally provided between the piezoelectric films 12 and the metal wires 10 so as to reduce the resistance of contact between the piezoelectric material and the material of the metal wires. For the same reason, another contact layer can be additionally provided between the piezoelectric films 12 and the metal wires 14.

More preferably, at least either the metal wires 10 or the metal wires 14 are formed from a metal material having a low reflection property (i.e., chrome, chrome oxide, tantalum, tantalum nitride, a laminated film of any of the metals, or the like). According to the arrangement, in the liquid crystal panel 1 utilizing the counter substrate 2, a low-reflectance material provided on the glass substrate 8 of the counter substrate 2 absorbs a part of light incident from the outside of the liquid crystal panel 1 upon the glass substrate 8, thereby reducing reflection of the light toward a viewer viewing a display image from the side of the counter substrate 2. This makes it possible to enhance contrast of an image displayed by the liquid crystal panel 1 utilizing the counter substrate 2.

The protecting film 16 is formed after the metal wires 14 are formed (see (d) of Fig. 11 and (d) of Fig. 12). Detailed description of a concrete method is omitted since it is the same as that illustrated in (a) of Fig. 8 and (d) of Fig. 9.

### <Example 3 of Arrangement/Manufacturing Steps>

### (Second Example of Case Where Opening Is Provided at Least in Display Area Surrounded by Two Metal Wires 10 and Two Metal Wires 14)

Example 2 described above has more manufacturing steps than Example 1. Therefore, it is desirable to simplify the steps. For example, patterning piezoelectric films 12 by use of metal wires 14 as a mask makes it possible to manufacture the counter substrate 2 by using the same number of masks as in Example 1. This makes it possible to improve yield and reduce manufacturing cost. Fig. 13 illustrates a counter substrate 2 thus arranged. (a) of Fig. 13 is a diagram illustrating a structure of a counter substrate 2 made through patterning of piezoelectric films 12 by use of metal wires 14 as a mask. (b) of Fig. 13 is a cross-sectional view taken along the line A-A' of (a) of Fig. 13.

The counter substrate 2 of Fig. 13 makes it possible to simplify the manufacturing steps while improving light transmittance. This makes it possible to improve yield and reduce manufacturing costs.

(a) through (d) of Fig. 14 and (a) through (d) of Fig. 15 illustrate steps of manufacturing the counter substrate 2 of Fig. 13. (a) through (d) of Fig.14 are diagrams illustrating the steps of manufacturing the counter substrate 2 illustrated in Fig. 13. (a) through (d) of Fig. 15 are cross-sectional views illustrating the steps of manufacturing the counter substrate 2 illustrated in Fig. 13. A cross-section taken along the line A-A' of (d) of Fig. 14 corresponds to (d) of Fig. 15. (a) through (c) of Fig. 14 correspond to (a) through (c) of Fig. 14, respectively, as is the case with the relation between (d) of Fig. 14 and (d) of Fig. 15. In the manufacture of the counter substrate 2 of Fig. A, first, the metal wires 10 are formed on the glass substrate 8 (see (a) of Fig. 14 and (a) of Fig. 15). Detailed description of a concrete method is omitted since it is the same as that illustrated in (a) of Fig. 8 and (a) of Fig. 9.

The piezoelectric films 12 and the metal wires 14 are formed after the metal wires 10 are formed (see (b) and (c) of Fig. 14, and (b) and (c) of Fig. 15). Specifically, a film of piezoelectric material (ZnO: zinc oxide) is formed at 250°C by electron cyclotron resonance (ECR) sputtering so as to have a thickness in a range from approximately 500 nm to 800 nm. Then, a metal film made of metal such as molybdenum is continuously formed by DC magnetron sputtering so as to have a thickness of approximately 200 nm. The metal film thus formed is shaped by photolithography into metal wires 14 each having a desired shape.

Dry etching utilizing tetrafluoromethane is adopted herein as an etching method for forming the metal wires 14. Then, parts of the film of piezoelectric material that have been exposed due to the dry etching of the metal film are etched by wet etching utilizing an organic acid such as acetic acid or oxalic acid as an etchant, whereby piezoelectric films 12 are formed. The terminal section (not illustrated) for electrical connection with the Y-direction voltage detecting section 32 is also formed simultaneously with the formation of the metal wires 14.

As well as being made of the aforementioned titanium, the metal wires 10 can be made of a titanium alloy; ITO or another conductive metal oxide; a metal material such as tantalum, molybdenum, aluminum, or an alloy containing any of the metals; or a laminated body thereof. In addition, as well as being made of the aforementioned molybdenum, the metal wires 14 can be made of titanium or a titanium alloy; ITO or another conductive metal oxide; a metal material such as tantalum, aluminum, or an alloy containing any of the metals; or a laminated body thereof. In the formation of the piezoelectric films 12, it is possible to use a material such as poly(vinylidene fluoride) as a piezoelectric material. A contact layer can be additionally provided between the piezoelectric films 12 and the metal wires 10 and between the piezoelectric film 12 and the metal wires 14, respectively, so as to reduce the resistance of contact between the piezoelectric material and the material of each kind of metal wire.

More preferably, at least either the metal wires 10 or the metal wires 14 are formed from a metal material having a low reflection property (i.e., chrome, chrome oxide, tantalum, tantalum nitride, a laminated film of any of the metals, or the like). According to the arrangement, in the liquid crystal panel 1 utilizing the counter substrate 2, a low-reflectance material provided on the glass substrate 8 of the counter substrate 2 absorbs a part of light incident from the outside of the liquid crystal panel 1 upon the glass substrate 8, thereby reducing reflection of the light toward a viewer viewing a display image from the side of the counter substrate 2. This makes it possible to enhance contrast of an image displayed by the liquid crystal panel 1 utilizing the counter substrate 2.

The protecting film 16 is formed after the metal wires 14 are formed (see (d) of Fig. 14 and (d) of Fig. 15). Detailed description of a concrete method is omitted since it is the same as that illustrated in (a) of Fig. 8 and (d) of Fig. 9.

### <Example 4 of Arrangement/Manufacturing Steps>

### (Arrangement Example of Counter Substrate 2 Having Black Matrix)

The counter substrate 2 can further include a black matrix 46 (light-blocking film). Fig. 16 illustrates a structure of the counter substrate 2 further including the black matrix 46 (Example 4 adopts the arrangement of Example 2 as a base arrangement, and describes the counter substrate 2 so as to clarify differences between Example 4 and Example 2). (a) of Fig. 16 is a diagram illustrating a structure of the counter substrate 2 including the black matrix 46. (b) of Fig. 16 is a cross-sectional view taken along the line A-A' of (a) of Fig. 13.

In the counter substrate 2 of Fig. 16, the black matrix 46 is formed between the glass substrate 8 and the metal wires 10 and 14 so as to be in a position corresponding to a reticular pattern formed by the metal wires 10 and 14. According to the arrangement, in the liquid crystal panel 1 utilizing the counter substrate 2, the black matrix 46 provided on the glass substrate 8 of the counter substrate 2 absorbs a part of light incident from the outside of the liquid crystal panel 1 upon the glass substrate 8, thereby reducing reflection of the light toward a viewer viewing a display image from the side of the counter substrate 2. This makes it possible to enhance contrast of an image displayed by the liquid crystal panel 1 utilizing the counter substrate 2.

The provision of the black matrix 46 eliminates the need to choose a metal material having a low reflection property as a wiring material for use in the formation of the metal wires 10 and 14. This makes it possible to choose a low-resistance metal material. That is to say, since the black matrix 64 suppresses surface reflection toward a viewer, a decrease in contrast due to surface reflection can be suppressed even if the metal wires 10 and 14 are made of a metal material having a high reflection property, e.g., aluminum.

(a) through (e) of Fig. 17 and (a) through (e) of Fig. 18 illustrate steps of manufacturing the counter substrate 2 including the black matrix 46. (a) through (e) of Fig. 17 are diagrams illustrating the steps of manufacturing the counter substrate 2 illustrated in Fig. 10. (a) through (e) of Fig. 18 are cross-sectional views illustrating the steps of manufacturing the counter substrate 2 illustrated in Fig. 10. A cross section taken along the line A-A' of (e) of Fig. 17 corresponds to (e) of Fig. 18. (a) through (d) of Fig. 17 correspond to (a) through (d) of Fig. 18, respectively, as is the case with the relation between (e) of Fig. 17 and (e) of Fig. 18.

In the manufacture of the counter substrate 2 of Fig. 16, first, the black matrix 46 is formed on the glass substrate 8 (see (a) of Fig. 17 and (a) of Fig. 18). Specifically, a silane coupling agent is applied onto the glass substrate 8 to increase adhesion between the black matrix 46 and the glass substrate 8. Then, a film of liquid light-blocking resin material is formed on the glass substrate 8 by spin coating so as to have a thickness in a range approximately from 1100 nm to 1500 nm. The resin material used here has both ultraviolet-curing and thermosetting properties. A method such as die coating or nozzle coating can be adopted instead of spin coating.

The film of resin material thus formed is baked at 120°C for approximately 5 minutes. After the baking is completed, the film of resin material is shaped into a desired shape by photolithography. The film of resin material is finally baked at 220°C for approximately 1 hour, thereby forming the black matrix 46 on the glass substrate 8. In the example illustrated in (a) of Fig. 17, a black matrix 46 having a reticular pattern is formed in a position corresponding to a position in which a metal wire 10 and a metal wire 14 are formed.

The metal wires 10 are formed after the black matrix 46 is formed (see (b) of Fig. 17 and (b) of Fig. 18). Specifically, a laminated metal film constituted by a layer of molybdenum and a layer of aluminum with a ratio of 70 nm: 150 nm is formed by DC magnetron sputtering. The laminated metal film thus formed is shaped by photolithography into metal wires 10 each having a desired shape. The metal wires 10 are formed on the black matrix 46 (see (b) of Fig. 17).

Wet etching utilizing a phosphoric-acid, nitric-acid, or acetic-acid etchant is adopted herein as an etching method for forming the metal wires 10. The terminal section (not illustrated) for electrical connection with the X-direction voltage detecting section 30 is also formed simultaneously with the formation of the metal wires 10. The molybdenum of the laminated metal film serves as a barrier metal for preventing aluminum from being etched in the etching for forming the metal wires 14.

The piezoelectric films 12 are formed after the metal wires 10 are formed (see (c) of Fig. 17 and (c) of Fig. 18). Specifically, a film of piezoelectric material (ZnO: zinc oxide) is formed at 250°C by electron cyclotron resonance (ECR) sputtering so as to have a thickness in a range from approximately 500 nm to 800 nm. The film of piezoelectric material thus formed is shaped by photolithography into piezoelectric films 12 each having a desired shape. Wet etching utilizing an organic acid such as acetic acid or oxalic acid as an etchant is adopted herein as an etching method for forming the piezoelectric films 12. Thus, each of the piezoelectric films 12 is formed only in a position corresponding to an intersection of a metal wire 10 and a metal wire 14.

The metal wires 14 are formed after the piezoelectric films 12 are formed (see (d) of Fig. 17 and (d) of Fig. 18). Specifically, a metal film made of metal such as aluminum is formed on the piezoelectric films 12 by DC magnetron sputtering so as to have a thickness of approximately 150 nm. The metal film thus formed is shaped by photolithography into metal wires 14 each having a desired shape. Dry etching utilizing a chlorine-oxygen mixed gas is adopted herein as an etching method.

The terminal section (not illustrated) for electrical connection with the Y-direction voltage detecting section 32 is also formed simultaneously with the formation of the metal wires 14.

The protecting film 16 is formed after the metal wires 14 are formed (see (e) of Fig. 17 and (e) of Fig. 18). Detailed description of a concrete method is omitted since it is the same as that illustrated in (a) of Fig. 8 and (d) of Fig. 9. It is preferable to use IZO (indium zinc oxide) instead of ITO in forming counter electrodes after the protecting film 16 is formed. This is because IZO does not cause electrolytic corrosion of aluminum, of which the metal wires 10 are made.

### <Example 5 of Arrangement/Manufacturing Steps>

### (Arrangement Example of Counter Substrate Having Color Filters)

The counter substrate 2 can further include color filters provided at least on light transmission areas in the effective display area of the glass substrate 8. Fig. 19 illustrates an arrangement of the counter substrate 2 further including color filters. Example 5 adopts Example 4 as a base arrangement, and describes the counter substrate 2 so as to clarify differences between Example 5 and Example 4. (a) of Fig. 19 is a diagram illustrating a structure of the counter substrate 2 including color filters. (b) of Fig. 19 is a cross-sectional view taken along the line A-A' of (a) of Fig. 19.

The counter substrate 2 of Fig. 19 basically has the same structure as the counter substrate 2 of Fig. 13. However, the counter substrate 2 of Fig. 19 has three kinds of color filters, i.e., red resists 48, blue resists 50, and green resists 52, instead of the aforementioned protecting film 16. In the example illustrated in Fig. 19, a red resist 48 and a blue resist 50 overlap on a metal wire 14.

That is, the color filters serve concurrently as a protecting film 16. A different color filter is formed for each area between two metal wires 14 (see (a) of Fig. 19).

A display panel utilizing the counter substrate 2 of Fig. 19 can display a color image. In addition, since the color filters serve concurrently as a protecting film 16, it is not necessary to separately provide a protecting film 16. This makes it possible to further reduce manufacturing costs of the counter substrate 2. As a result, the display panel including the counter substrate 2 can be easily adopted for various display apparatuses.

(a) through (e) of Fig. 20 and (a) through (e) of Fig. 21 illustrate steps of manufacturing the counter substrate 2 of Fig. 19. (a) through (e) of Fig. 20 are diagrams illustrating the steps of manufacturing the counter substrate 2 illustrated in Fig. 19. (a) through (e) of Fig. 21 are cross-sectional views illustrating the steps of manufacturing the counter substrate 2 illustrated in Fig. 19. A cross-section taken along the line A-A' of (e) of Fig. 20 corresponds to (e) of Fig. 21. (a) through (d) of Fig. 20 correspond to (a) through (d) of Fig. 21, respectively, as is the case with the relation between (e) of Fig. 20 and (e) of Fig. 21.

In the manufacture of the counter substrate 2 of Fig. 19, first, the black matrix 46 is formed on the glass substrate 8 (see (a) of Fig. 20 and (a) of Fig. 21). Detailed description of a concrete method is omitted since it is the same as that illustrated in (a) of Fig. 17 and (a) of Fig. 18.

The metal wires 10 are formed after the black matrix 46 is formed (see (b) of Fig. 20 and (b) of Fig. 21). Detailed description of a concrete method is omitted since it is the same as that illustrated in (b) of Fig. 17 and (b) of Fig. 18.

The piezoelectric films 12 are formed after the metal wires 10 are formed (see (c) of Fig. 20 and (c) of Fig. 21). Detailed description of a concrete method is omitted since it is the same as that illustrated in (c) of Fig. 17 and (c) of Fig. 18.

The metal wires 14 are formed after the piezoelectric films 12 are formed (see (d) of Fig. 20 and (d) of Fig. 21). Detailed description of a concrete method is omitted since it is the same as that illustrated in (d) of Fig. 17 and (d) of Fig. 18.

The color filters are formed after the metal wires 14 are formed (see (e) of Fig. 20 and (e) of Fig. 21). Specifically, a liquid color filter resist is formed on the glass substrate 8 by spin coating so as to have a thickness in a range approximately from 1100 nm to 1500 nm. The resist used here is a pigment or dye that has both ultraviolet-curing and thermosetting properties and varies in transmittance depending on colors. A method such as die coating or nozzle coating can be adopted instead of spin coating.

The resist thus formed is baked at 120°C for approximately 5 minutes. After the baking is completed, the resist is formed into desired shapes by photolithography. The resist is finally baked at 220°C for approximately 1 hour, thereby forming the red resists 48 on the glass substrate 8. The blue resists 50 and the green resists 52 are formed in the same manner.

Two adjacent color filters are formed on a metal wire 14 so as to overlap, thereby preventing the metal wire 14 from being exposed. In the example illustrated in (e) of Fig. 21, a red resist 48 and a blue resist 50 overlap on a metal wire 14. It is possible here to form a black matrix or a protecting film separately instead of overlapping two adjacent color filters with each other as described above.
In Example 5, the metal wires 10, the piezoelectric films 12, and the metal wires 14 are formed after the black matrix 46 is formed. Then, the color filters 48, 50, and 52 are formed finally. In contrast, there can be another example where, as illustrated in (a) and (b) of Fig. 22, the metal wires 10, the piezoelectric films 12, the metal wires 14, and the protecting film 16 are formed on the color filters 48, 50, and 52 after the formation of the black matrix 46 and the color filters 48, 50, and 52 on the glass substrate 8 (i.e., after the formation of the arrangement of color filters). (a) of Fig. 22 is a diagram illustrating another structure of the counter substrate 2 including color filters. (b) of Fig. 22 is a cross-sectional view taken along the line A-A' of (a) of Fig. 22.

The counter substrate 2 of Fig. 22 can be made higher in smoothness than the counter substrate 2 of Fig. 19. This makes it possible to obtain a high-quality display image without display unevenness.

It is preferable to use IZO (indium zinc oxide) instead of ITO in forming counter electrodes after the color filters are formed. This is because IZO does not cause electrolytic corrosion of aluminum, of which is the metal wires 10 are made.

### (First Example of TFT Substrate Having Touch Panel Structure)

According to the present invention, it is possible to form the metal wires 10, the piezoelectric films 12, the metal wires 14, etc. on a TFT substrate instead of the counter substrate. In this case, the TFT substrate (display panel substrate) has a touch panel function. Fig. 23 illustrates the arrangement.

(a) of Fig. 23 is a diagram illustrating a structure of a TFT substrate 4a having a touch panel structure. (b) of Fig. 23 is a cross-sectional view taken along the line A-A' of (a) of Fig. 23. The TFT substrate 4a of Fig. 23 is made based on the counter substrate 2 of Fig. 10. That is, in the TFT substrate 4a, metal wires 10, piezoelectric films 12, metal wires 14, and a protecting film 16 are formed on a glass substrate 8. A so-called TFT circuit 100 for driving a liquid crystal panel is further formed on the protecting film 16. The TFT circuit 100 includes gate electrodes/wires 101, auxiliary capacitor wires 102, a gate insulating film 103, semiconductor layers 104, contact layers 105, source electrodes/wires 106, an interlayer insulating film 108, contact holes 109, and transparent picture electrodes 110. A further detailed description is omitted since the arrangement of the TFT circuit 100 is publicly known.

Combining the TFT substrate 4a with a general counter substrate makes it possible to manufacture a liquid crystal panel 1 having a touch panel function. In this case, it is possible to manufacture the liquid crystal panel 1, regardless of whether or not the counter substrate has a touch panel function. The glass substrate 8 of the TFT substrate 4a can be a light-blocking insulating substrate, unlike the counter substrate 2 having a touch panel function.

Although the arrangement of Example 2 is adopted as a base arrangement for the TFT substrate 4a of Fig. 23, the arrangement of Example 1, 3, or 4 can be adopted instead.

### (Effects of Above Arrangement)

In the manufacture of the TFT substrate 4a, overlapping the gate wires 101 and the source wires 106 with the metal wires 10 and the metal wires 14, respectively, is carried out by use of a high-accuracy stepper or an exposure apparatus such as a mirror projection exposure apparatus. This causes an amount of overlap misalignment between two wires to be sufficiently smaller than that obtained by using a common method for joining two substrates. This makes it possible to increase an aperture ratio.

For example, the joining of two substrates results in an amount of overlap misalignment of approximately ±5 µm in general. On the other hand, the use of an exposure apparatus results in an amount of overlap misalignment of ±1 µm or less in general. Therefore, the latter amount is sufficiently smaller than the former amount. An amount of overlap misalignment varies depending on the size of a mask and/or the size of a substrate. The former amount is an amount of overlap misalignment obtained as a result of the joining of a 365 by 460 mm glass substrate. On the other hand, the latter amount is an amount of overlap misalignment obtained as a result of pattern overlapping by a stepper method utilizing a 6-inch mask.

### (Example of TFT Substrate 4a Having Color Filters)

The TFT substrate 4a can include the aforementioned color filters. Fig. 24 illustrates the TFT substrate 4a thus arranged. (a) of Fig. 24 is a diagram illustrating another structure of the TFT substrate 4a having a touch panel structure. (b) of Fig. 24 is a cross-sectional view taken along the line A-A' of (a) of Fig. 24. The TFT substrate 4a of Fig. 24 is made based on the counter substrate 2 of Fig. 22. The TFT substrate 4a of Fig. 24 can be applied to the arrangement of Fig. 19 (Example 5). Furthermore, it is possible to form an organic EL, instead of the TFT circuit 100, on the protecting film 16.

### (Arrangement Example of Liquid Crystal Panel 1a Having Cell Gap Controlling Columns 113)

The liquid crystal panel 1a can be arranged such that each of cell gap controlling columns 113 is provided in a position corresponding to a position where a piezoelectric film 8 is formed in a counter substrate 2a or in a TFT substrate 4a. The cell gap controlling columns 13 serve as photo spacers for controlling a gap between the counter substrate 2a and the TFT substrate 4a.

Fig. 25 illustrates the liquid crystal panel 1a thus arranged. Fig. 25 is a diagram illustrating an arrangement of the liquid crystal panel 1a including the cell gap controlling columns 113. As illustrated in Fig. 25, the liquid crystal panel 1a is constituted by the counter substrate 2a and the TFT substrate 4a. The counter substrate 2a includes so-called color filters, namely, black resists 46, red resists 48, and blue resists 50 that are not illustrated. The resists have an alignment film 111 formed thereon. The TFT substrate 4a of Fig. 25 is arranged such that the TFT substrate 4a of Fig. 23 has an alignment film 111 further formed thereon.

The liquid crystal panel 1a of Fig. 25 has a liquid crystal layer 112 sandwiched between the counter substrate 2a and the TFT substrate 4a. Furthermore, each of the cell gap controlling columns 113 is provided between the counter substrate 2a and the TFT substrate 4a so as to be in a position corresponding to that position on the TFT substrate 4a in which a piezoelectric film 8 is formed. The arrangement improves pressing-force sensitivity since stronger pressing force is applied to the piezoelectric film 12 via the cell gap controlling column 113. This makes it possible to realize a liquid crystal panel 1a having a touch panel function with higher sensitivity.

The liquid crystal panel 1a of Fig. 25 is based on Example 2. However, a liquid crystal panel 1a having as high pressing-force sensitivity as the liquid crystal panel 1a of Fig. 25 can be realized based on another one of the aforementioned examples.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### (Material of Insulating Substrate)

The counter substrate 2 and the TFT substrate 4a can each be a flexible substrate made of a material such as plastic. A liquid crystal panel 1 (1a) utilizing a plastic substrate made of a material such as polyethylene sulfonate as an insulating substrate for the counter substrate 2 or the TFT substrate 4a can be dented with lower pressing force, as compared to a common substrate made of a material such as glass with a thickness in a range from 0.5 mm to 0.7 mm. Therefore, it is possible to realize a touch panel having higher sensitivity. In addition, it is possible to realize a touch panel capable of detecting coordinates even in a case where the display panel is reversely provided (i.e., the counter substrate 2 is provided on a back surface in relation to a viewing side).

As described above, a display panel substrate according to the present invention includes: first conductive wires formed on an insulating substrate, second conductive wires intersecting with the first conductive wires formed on the insulating substrate; and piezoelectric films each formed at an intersection of a first conductive wire and a second conductive wire and separating the first conductive wire from the second conductive wire. This allows integration of a touch panel into a display panel constituted by the display panel substrate, without causing an increase in size of the display panel.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is widely utilized as a display panel substrate (counter substrate, drive substrate) that constitutes a display panel integrated with a touch panel. Moreover, the present invention is widely utilized as a display panel integrated with a touch panel, or as an optical display apparatus including the display panel.

## Claims

1. A display panel substrate that constitutes a display panel, comprising:
an insulating substrate;
first conductive wires formed on the insulating substrate;
a piezoelectric film formed on the first conductive wires and the insulating substrate so as to be at least in an effective display area of the insulating substrate;
second conductive wires intersecting with the first conductive wires via the piezoelectric film; and
an insulating film for protecting the first and second conductive wires and the piezoelectric film at least in the effective display area of the insulating substrate.

2. The display panel substrate as set forth in claim 1, wherein the piezoelectric film has an opening at least in a part of an area surrounded by two first conductive wires and two second conductive wires.

3. The display panel substrate as set forth in claim 1 or 2, wherein at least either of the first conductive wires or the second conductive wires include a conductive material film having an area exposed toward a display/viewing surface and made of at least one selected from chrome, chrome oxide, tantalum, and tantalum nitride.

4. The display panel substrate as set forth in any one of claims 1 through 3, wherein a light-blocking film is formed in a lower position corresponding to an area shaped into a reticular pattern by the first conductive wires and the second conductive wires.

5. The display panel substrate as set forth in claim 4, wherein the light-blocking film is a black resist made of an organic resin.

6. The display panel substrate as set forth in any one of claims 1 through 5, wherein a plurality of color filters are formed over light transmission areas at least in the effective display area of the insulating substrate.

7. The display panel substrate as set forth in claim 6, wherein the plurality of color filters are formed as the insulating film.

8. The display panel substrate as set forth in any one of claims 1 through 7, wherein the insulating substrate is a flexible substrate containing a plastic material.

9. The display panel substrate as set forth in any one of claims 1 through 8, wherein the insulating substrate has a light-transmitting property.

10. The display panel substrate as set forth in any one of claims 1 through 9, wherein the insulating substrate has a circuit provided thereon for driving the display panel.

11. The display panel substrate as set forth in any one of claims 1 through 10, further comprising coordinate finding circuits that detect a voltage signal generated by pressing force and specify coordinates of a pushed position in accordance with the voltage signal thus detected.

12. A display panel comprising a display panel substrate as set forth in any one of claims 1 through 11.

13. A display panel comprising:
a display panel substrate as set forth in any one of claims 1 through 11; and
coordinate finding circuits, provided outside the display panel substrate, which detect a voltage signal generated by pressing force and specify coordinates of a pushed position in accordance with the voltage signal thus detected.

14. The display panel as set forth in claim 12 or 13, further comprising:
another substrate facing the display panel substrate; and
a plurality of photo spacers for controlling a gap between the display panel substrate and the another substrate, wherein
each of the photo spacers is provided in a position corresponding to a position on the display panel substrate in which position the piezoelectric film is formed.

15. A display apparatus comprising a display panel as set forth in any one of claims 12 through 14.

16. A method for manufacturing a display panel substrate as set forth in any one of claims 1 through 11,
the method comprising a step of simultaneously patterning the second conductive wires and the piezoelectric film.
